(19) Europäisches Patentamt
European Patent Office
Office européen des brevets

(11) EP 2 237 086 A1

# (12) EUROPEAN PATENT APPLICATION
published in accordance with Art. 153(4) EPC

(43) Date of publication:
**06.10.2010 Bulletin 2010/40**

(21) Application number: **08866375.2**

(22) Date of filing: **26.12.2008**

(51) Int Cl.:
***G02B 5/30*** *(2006.01)* ***C08J 5/18*** *(2006.01)*
***C08L 39/00*** *(2006.01)* ***C08L 41/00*** *(2006.01)*
***C08L 101/12*** *(2006.01)* ***G02F 1/13363*** *(2006.01)*

(86) International application number:
**PCT/JP2008/073808**

(87) International publication number:
**WO 2009/084663 (09.07.2009 Gazette 2009/28)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.12.2007 JP 2007339806**
**28.12.2007 JP 2007339807**
**01.04.2008 JP 2008095080**
**16.07.2008 JP 2008184555**

(71) Applicant: **Nippon Shokubai Co., Ltd.**
**Osaka-shi, Osaka 541-0043 (JP)**

(72) Inventors:
- **MIYAI, Takashi**
  **Suita-shi**
  **Osaka 564-8512 (JP)**
- **SHIOTANI, Yoshiyuki**
  **Suita-shi**
  **Osaka 564-8512 (JP)**
- **ASANO, Hideo**
  **Suita-shi**
  **Osaka 564-8512 (JP)**
- **NIWA, Hirokazu**
  **Suita-shi**
  **Osaka 564-8512 (JP)**
- **HIRAMA, Susumu**
  **Suita-shi**
  **Osaka 564-8512 (JP)**
- **ISHIDA, Satoshi**
  **Suita-shi**
  **Osaka 564-8512 (JP)**
- **TAKAIWA, Masanori**
  **Suita-shi**
  **Osaka 564-8512 (JP)**

(74) Representative: **Hart-Davis, Jason et al**
**Cabinet Beau de Loménie**
**158, rue de l'Université**
**75340 Paris Cedex 07 (FR)**

## (54) OPTICAL FILM AND IMAGE FORMING APPARATUS HAVING THE SAME

(57) A novel optical film is provided that exhibits a wavelength dispersion (a reverse wavelength dispersion) such that the birefringence of the film decreases as the wavelength becomes shorter, at least in the visible light range. The optical film includes a layer formed of a resin (A) having a heteroaromatic group or a molecular structure represented by the following formula (1), (2) or (3):

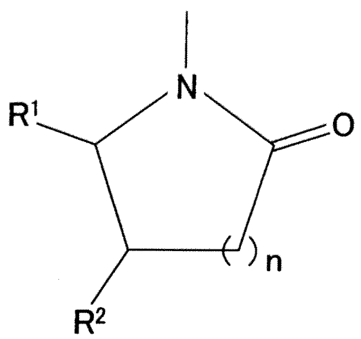

(1)

EP 2 237 086 A1

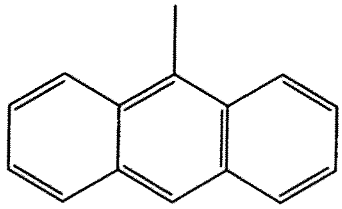

(2)

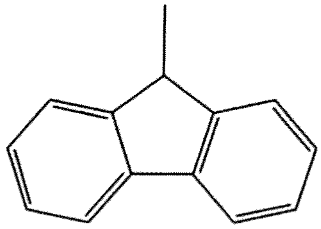

(3)

where in the formula (1), n is a natural number in the range of 1 to 4, and $R^1$ and $R^2$ each independently represent a hydrogen atom or a methyl group. The optical film exhibits a wavelength dispersion such that the birefringence of the film decreases as the wavelength becomes shorter, at least in the visible light range.

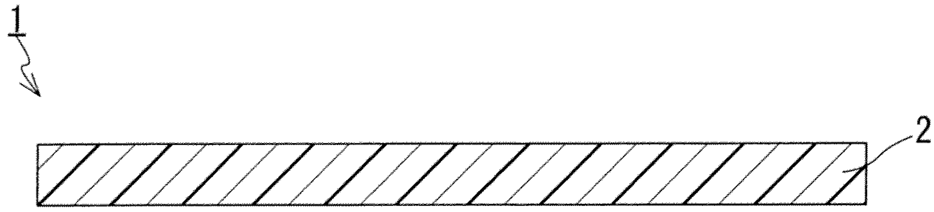


FIG.1

## Description

### TECHNICAL FIELD

The present invention relates to an optical film that exhibits a wavelength dispersion (a reverse wavelength dispersion) such that the birefringence of the film decreases as the wavelength becomes shorter, at least in the visible light range, and an image display apparatus having the optical film.

### BACKGROUND ART

Optical members that utilize birefringence inducted by polymer orientation are used widely in the image display field. One of such optical members is a Retardation plate (a retardation film) that is incorporated into an image display apparatus for the purposes of, for example, compensation of color tone or viewing angle. For example, in a reflective-type liquid crystal display (LCD), a retardation plate (a λ/4 plate) is used in which the difference in optical path length (the retardation) caused by birefringence is 1/4 the wavelength. In an organic EL display (OLED), for the purpose of presenting reflection of an external light, an antireflection plate may be used including a polarizing plate combined with a λ/4 plate (see JP 2007-273275A). The uses of these optical members that exhibit birefringent properties are expected further to increase in the future.
Conventionally, cellulose derivatives such as triacetyl cellulose (TAC), polycarbonate, and polycycloolefin mainly are used for optical members. These general polymers exhibit a wavelength dispersion such that the birefringence increases (i.e. the retardation) increases) as the wavelength of light becomes shorter. In order to obtain an image display apparatus with excellent display characteristics, on the other hand, optical members are desired that exhibit a wavelength dispersion such that the birefringence decreases (i.e. the retardation decreases) as the wavelength of light becomes shorter. In the present specification, the wavelength dispersion such that the birefringence decreases as the wavelength of light becomes snorter, at least in the visible light range, is referred to as a "reverse wavelength dispersion", according to its conventional name used by persons skilled in the art and based on the fact that they are opposite to the wavelength dispersion exhibited by general polymers and optical members formed of the general polymers.
JP 2001-337222 A discloses a retardation plate composed of a resin composition containing a polymer (polynorbornene) having a positive) intrinsic birefringence and a polymer (a styrene polymer) having a negative intrinsic birefringence. JP 2001-235622 A discloses a retardation plate composed of a copolymer having a molecular chain (a norbornene chain) with a positive intrinsic birefringence and a molecular chain (a styrene chain) with a negative intrinsic birefringence. These retardation plates are optical members that exhibit the reverse wavelength dispersion.

### DISCLOSURE OF THE INTENTION

The present invention is intended to provide a novel optical film that exhibits the reverse wavelength dispersion.
The optical film of the present invention includes a layer formed of a resin (A) having a heteroaromatic group or a molecular structure represented by the following formula (1), (2) or (3), and exhibits a wavelength dispersion such that the birefringence of the film decreases as the wavelength becomes smaller, at least in the visible light range.
[Chemical Formula 1]

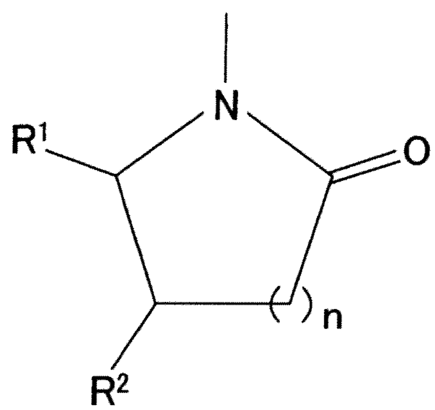

(1)

[Chemical Formula 2]

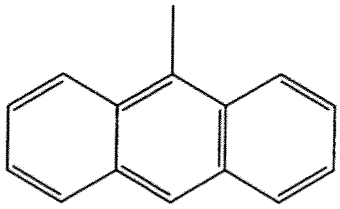

(2)

[Chemical Formula 3]

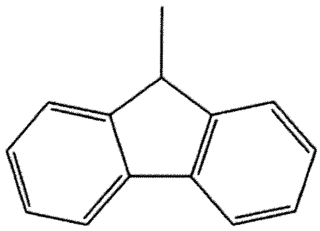

(3)

In the formula (1), n is a natural number in the range of 1 to 4, and $R^1$ and $R^2$ each independently represent a hydrogen atom or a methyl group.

An image display apparatus of the present invention includes an optical film of the present invention.

The optical film of the present invention exhibits the reverse wavelength dispersion since it has a layer formed of a resin (A). The resin (A) has a heteroaromatic group, or a molecular structure represented by the aforementioned formula (1), (2) or (3).

BRIEF DESCRIPTION OF THE DRAWING

Fig. 1 is a cross-sectional view that schematically shows an example of the optical member of the present invention.
Fig. 2 is a cross-sectional view that schematically shows another example of the optical member of the present invention.
Fig. 3 is a cross-sectional view that schematically shows still another example of the optical member of the present invention.
Fig. 4 is a cross-sectional view that schematically shows yet another example of the optical member of the present invention.

BEST MODE FOR CARRYING OUT THE INVENTION

The term "resin" used in the present specification has a wider concept than that of the term "polymers". The may be composed of one polymer or two or more polymers and may contain materials other than polymers, for example, an ultraviolet absorber, an antioxidant, an additive such as a filler, a compatibilizer, and a stabilizing agent as required.

[Resin (A)]

The structure of the resin (A) is not particularly limited as long as it hat a heteroaromatic group, or a molecular

structure represented by the above-described formula (1), (2) or (3). For example, the resin (A) contains a polymer having a structural unit (a repeating unit) with a molecular structure X bonded thereto, where the molecular structure X indicates the heteroaromatic group, or the molecular structure represented by the formula (1), (2) or (3).

The resin (A) is, for example, an acrylic resin or a cycloolefin resin. The acrylic resin and cycloolefin resin have high transparency and mechanical properties. An optical film having a layer formed of such a resin (A) is suitable as an optical film to be used for an image display apparatus such as a liquid crystal display (LCD).

The acrylic resin contains an acrylic polymer in an amount of at least 50 wt%, preferably at least 60 wt%, more preferably at least 70 wt%, and further preferably at least 80 wt%. The cycloolefin resin contains a cycloolefin polymer in an amount of at least 50 wt%, preferably at least 60 wt%, more preferably at least 70 wt%, and further preferably at least 80 wt%.

One type of the optical films is a film for protecting a polarizer in a polarizing plate (a polarizer protective film). When the resin (A) has a molecular structure represented by the formula (1), the optical film of the present invention having a layer formed of the resin is suitable as a polarizer protective film.

The polarizer protective film is used in the state where it is laminated on one or both of the surfaces of a polarizer. Typically, the polarizer is formed by dyeing a polyvinyl alcohol film with a dichroic material such as a dichroic dye or an iodine. It is preferable that the polarizer protective film to be laminated on the polarizer normally have water permeability, since an aqueous solution is used for dyeing. The use of a water-based adhesive for laminating the polarizer and the polarizer protective film also is one of the reasons why the polarizer protective film with water permeability is preferable. For example, a film formed of a cycloolefin polymer hardly exhibits water permeability due to the strong hydrophobicity of the polymer and therefore cannot necessarily be considered to be suitable as a polarizer protective film. In contrast, the molecular structure represented by the formula (1) has high hydrophilicity. Accordingly, the optical film of the present invention with a layer formed of the resin (A) having the molecular structure exhibits high water permeability and therefore is suitable as a polarizer protective film, although it also depends on the structure of a specific optical film, such as the content of the molecular structure in the resin (A).

The resin (A) may have two or more of the molecular structures X.

An example of the polymer having a structural unit with a molecular structure X bonded thereto is a polymer (B-1) having, as a structural unit, an α,β-unsaturated monomer unit with a heteroaromatic group, or a unit represented by the following formula (4), (5) or (6). That is, the resin (A) may contain the polymer (B-1) which has, as a structural unit, an α,β-unsaturated monomer unit with a heteroaromatic group, or has, as a structural unit, a unit represented by the following formula (4), (5) or (6).

[Chemical Formula 4]

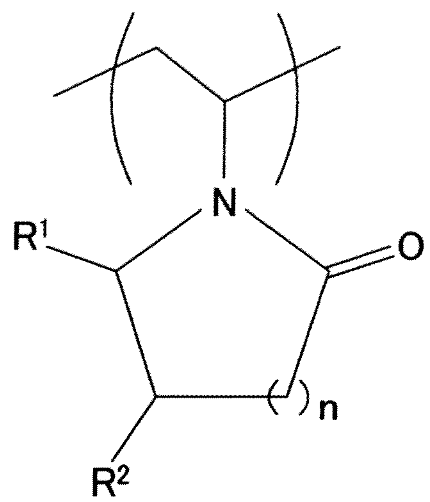

(4)

[Chemical Formula 5]

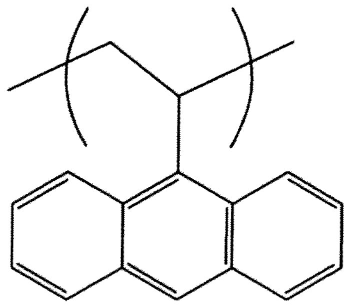

(5)

[Chemical Formula 6]

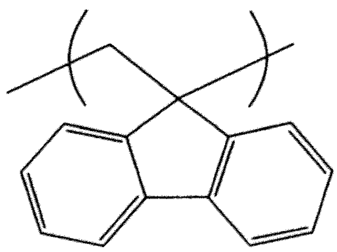

(6)

In the formula (4), n is a natural number in the range of 1 tao 4, and $R^1$ and $R^2$ each independently represent a hydrogen atom or a methyl group.

Hereinafter, the unit represented by the formula (4), (5) or (6) and the α,β-unsaturated monomer unit with a heteroaromatic group each are referred to as a structural unit Y. Furthermore, the α,β-unsaturated monomer unit with a heteroaromatic group is described simply as an unsaturated monomer unit.

Among the structural units Y, the units represented by the formulae (4), (5) and (6) are structural units formed by polymerization of monomers in which a vinyl group or a methylene group, which is a polymerizable group, is bonded to molecular structures represented by the formulae (1), (2) and (3), respectively. Typically, the unsaturated monomer unit is a structural unit that is formed by polymerization of a monomer in which a vinyl group or a methylene group, which is a polymerizable group, is bonded to a heteroaromatic group.

The structural unit Y has an effect of allowing the polymer (B-1) to have a negative intrinsic birefringence. This effect of the structural unit Y allows the optical film of the present invention to exhibit reverse wavelength dispersion.

A structural unit having an effect of allowing a polymer to have a negative (or positive) intrinsic birefringence is a structural unit whose homopolymer has a negative (or positive) intrinsic birefringence, when the homopolymer is formed. Whether the intrinsic birefringence of a polymer itself is positive or negative is determined in view of the balance between the birefringence produced by the unit and the birefringence produced by the other structural units of the polymer.

Whether the intrinsic birefringence of a polymer is positive or negative can be determined based on a value (n1-n2) obtained by subtracting a refractive index n2 from a refractive index n1 of a layer (for example, a sheet or a film) in which the molecular chain of the polymer is oriented uniaxially. The refractive indices n1 and n2 are those of the layer with respect to oscillating components, of light incident perpendicularly to the principal surface of the layer, that are parallel with and perpendicular to the direction (the orientation axis) in which the molecular chain is oriented in the layer, respectively. The value of the intrinsic birefringence of each polymer can be determined by calculation based on the molecular structure thereof.

Whether the intrinsic birefringence of a resin is positive or negative is determined in view of the balance between birefringences produced by the respective polymers contained in the resin.

The polymer (B-1) preferably has a unit represented by the formula (4) or (5) or an unsaturated monomer unit and more preferably a unit represented by the formula (4) or an unsaturated monomer unit.

The unit represented by the formula (4) is formed by polymerization of a monomer lactam) in which a vinyl group, which is a polymerizable group, is bonded to a lactam structure represented by the formula (1). The unit represented by the formula (4) is at least one selected from, for example, an N-vinyl-2-pyrrolidone unit, an N-vinyl-ε-caprolactam unit, an N-vinyl-2-piperidone unit, an N-vinyl-4-mathyl-2-pyrrolidono unit, an N-vinyl-5-methyl-2-pyrrolidone unit, and an N-vinyl-ω-heptalactam unit.

The unit represented by the formula (5) is a vinylanthracene unit. The unit is formed by polymerization of a monomer (vinylanthracene) in which a vinyl group, which is a polymerizable group, is bonded to an anthracene structure represented by the formula (2). A part of the hydrogen atom on the ring represented by the formula (5) may be substituted by a group mentioned as an example of the organic residue in the formula (8) to be described later.

The unit represented by the formula (6) is a dibenzofulvene unit. The unit is formed by polymerization of a monomer (dibenzofulvene) in which a methylene group, which is a polymerizable group, is bonded to a fluorene structure represented by the formula (3). A part of the hydrogen atom on the ring represented by the formula (6) may be substituted by a group mentioned as an example of the organic residue in the formula (8) to be described later.

The unsaturated monomer unit is not particularly limited and, for example, the heteroaromatic group of the unit is not particularly limited. The hetero atom in the heteroaromatic group is typically an oxygen atom, a sulfur atom, or a nitrogen atom. A nitrogen atom is preferable since it has an excellent effect of allowing the wavelength dispersion of birefringence to improve in the polymer (B-1). An improvement in the wavelength dispersion of birefringence in the polymer (B-1) increases the degree of freedom in controlling the reverse wavelength dispersion in the optical film of the present invention. For example, a high reverse wavelength dispersion is achieved depending on the structure of the film.

The heteroaromatic group is, for example, at least one selected from a carbazole group, a pyridine group, an imidazole group, and a thiophene group.

The unsaturated monomer unit is, for example, at least one selected from a vinylcarbazole unit, a vinylpyridine unit, a vinylimidazole unit, and a vinylthiophene unit.

A vinylcarbazole unit is shown in the following formula (7). A part of the hydrogen atoms on the ring represented by the formula (7) may be substituted by a group mentioned as an example of the organic residue in the formula (8) to be described later.

[Chemical Formula 7]

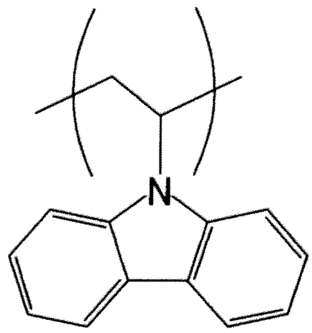

(7)

The unsaturated monomer unit is preferably at least one selected from a vinylcarbazole unit and a vinylpyridine unit, and more preferably a vinylcarbazole unit. These units are excellent particularly in the effect of allowing the wavelength dispersion of birefringence to improve in the polymer (B-1).

The polymer (B-1) may have at least two types of structural units Y and may have a structural unit other than the structural units Y as long as an optical film that exhibits the reverse wavelength dispersion is obtained.

When the resin (A) contains the polymer (B-1), the resin (A) may contain a polymer other than the polymer (B-1) as long as an optical film that exhibits the reverse wavelength dispersion is obtained.

Another example of the polymer having a structural unit with a molecular structure X bonded thereto is a polymer having a structural unit in which at least a part of a molecular structure or a functional group has been modified by the molecular structure X.

The polymer is, for example, a cellulose derivative such as triacetyl cellulose (TAC) having a repeating unit in which a hydroxyl group or an acetyl group has been modified by the molecular structure X. Bonding of the molecular structure X allows at least a part of the repeating unit of the cellulose derivative to have an effect of allowing the derivative

to have a negative intrinsic birefringence. This effect based on the modification by the molecular structure X allows the optical film of the present invention to exhibit the reverse wavelength dispersion.

[Optical Film]

Hereinafter, specific examples of the optical film of the present invention are described.

[Embodiment 1]

Fig. 1 shows an example of the optical film of the present invention. The optical firm 1 shown in Fig. 1 is composed of one layer 2, and the laver 2 is formed of a resin (A) containing a polymer (B-1) having a structural unit Y. In this embodiment, the polymer (B-1) has a negative intrinsic birefringence, and the resin (A) further contains a polymer (B-2) having a positive intrinsic birefringence. The resin (A) is a composition containing the polymers (B-1) and (B-2).

The resin (A) contains the polymer (B-1) having a negative intrinsic birefringence and the polymer (B-2) having a positive intrinsic birefringence. When both polymers are oriented in the same direction, the birefringences thereof are cancelled by each other because the slow axes (or fast axes) of the respective polymers are orthogonal to each other. The degree of this cancellation of the birefringences varies with the wavelength, therefore, the reverse wavelength dispersion of birefringence, for example, the reverse wavelength dispersion of retardation, are produced.

Although the optical film 1 is a single layer, it exhibits the reverse wavelength dispersion. Therefore, while the thickness of the film is reduced, desired optical properties is obtained. This makes it possible to achieve further reductions in size and weight of an image display apparatus provided with the optical film 1. Furthermore, as compared to an optical film whose reverse wavelength dispersion is provided by stacking a plurality of layers together, the optical film 1 has a higher productivity since it is not necessary to adjust the lamination angles of the respective layers.

From the viewpoint of the orientation of the polymers (B-1) and (B-2), the optical film 1 is a member formed by orienting the resin (A) containing the polymers (B-1) and (B-2). The orientation of the resin (A) is realized by stretching the resin (A) shaped into a film.

The polymer (B-2) is not particularly limited as long as it has a positive intrinsic birefringence.

Preferably, the polymer (B-2) has a ring structure in its main chain. When it has a ring structure in its main chain, the glass transition temperatures (Tg) of the polymer (B-2) and the resin (A) containing the polymer increase and thereby the optical film 1 is provided with high heat resistance. Such an optical film with high heat resistance can be disposed near a heat generating portion such as a light source in an image display apparatus. Furthermore, since a post treatment (for example, a surface treatment such as coating) at high temperature is feasible, the optical film 1 has a higher productivity.

The Tg of the polymer (B-2) having a ring structure in its main chain and the resin (A) containing the polymer are, for example, at least 110°C. Depending on the type of the ring structure, the content of the ring structure in the polymer (B-2), and the content of the polymer (B-2) in the resin (A), the Tg becomes at least 115 °C, at least 120 °C, or further at least 130°C. The Tg is measurable according to JIS K7121.

The polymer (B-2) having a ring structure in its main chain is not particularly limited. It is, for example, at least one selected from a cycloolofin polymer and a cellulose derivative.

The polymer (B-2) may be a (meth)acrylic polymer. In this case, an optical film is achieved that is improved in optical properties and various properties such as mechanical strength, molding processability, and surface strength.

The (meth)acrylic polymer is a polymer with (meth)acrylic acid ester units that account for at least 50 mol%, preferably at least 60 mol%, and more preferably at least 70 mol%, of all the structural units. The (meth)acrylic polymer may contain a ring structure that is a derivative of a (meth)acrylic acid ester unit. In this case, the total content of the (meth)acrylic acid ester units and the ring structure in the (meth)acrylic polymer is at least 50 mol% of all the structural units.

When the polymer (B-2) is a (meth)acrylic polymer, the degree of freedom in controlling the reverse wavelength dispersion is increased in the optical film 1. The wavelength dispersion of birefringence exhibited by the polymer (B-1) having a structural unit Y in its main chain is considerably higher as compared to that of birefringence exhibited by the polymer (B-2), a (meth)acrylic polymer. Thus, a combination of the polymers (B-1) and (B-2) that are significantly different from each other in wavelength dispersion of birefringence results in an increase in the degree of freedom in controlling the reverse wavelength dispersion.

The polymer (B-2) may be a (meth)acrylic polymer having a ring structure in its main chain. As described above, when the polymer (B-2) is a (meth)acrylic polymer having a ring structure in its main chain, the Tg of the polymer (B-2) and the resin (A) containing the polymer (B-2) increase and thereby the optical film 1 is provided with high heat resistance.

The ring structure that the (meth)acrylic polymer has in its main chain is, for example, a ring structure having an ester group, an imide group or an acid anhydride group.

An example of more specific ring structures is at least one selected from a lactone ring structure, a glutarimide structure, a glutaric anhydride structure, an N-substituted maleimide structure, and a maleic anhydride structure. The

polymer (B-2) having such a ring structure in its main chain exhibits a high positive intrinsic birefringence when oriented, thus, a combination with the polymer (B-1) further increases the degree of freedom in controlling the reverse wavelength dispersion.

The ring structure is preferably at least one selected from a lactone ring structure and a glutarimide structure and more preferably a lactone ring structure. The polymer (B-2) having a lactone ring structure or a glutarimide structure, particularly, a lactone ring structure in its main chain has very low wavelength dispersion of birefringence. Accordingly, a combination with the polymer (B-1) further increases the degree of freedom in controlling the reverse wavelength dispersion.

The specific lactone ring structure that the polymer (B-2) may have is not particularly limited and is, for example, a structure represented by the following formula (8).

[Chemical Formula 8]

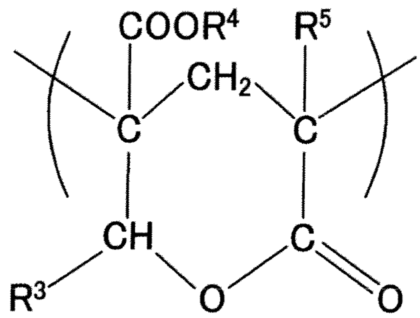

(8)

In the formula (8), $R^3$, $R^4$ and $R^5$ each independently represent a hydrogen atom or an organic residue having carbon numbers of 1 to 20. The organic residue may contain an oxygen atom.

Examples of the organic residue include: alkyl groups having carbon numbers of 1 to 20 such as a methyl group, an ethyl group, and a propyl group; unsaturated aliphatic hydrocarbon groups having carbon numbers of 1 to 20 such as an ethenyl group and a propenyl group; aromatic hydrocarbon groups having carbon numbers of 1 to 20 such as a phenyl group and a naphthyl group; and groups obtained by substituting one or more hydrogen atoms of the alkyl groups, the unsaturated aliphatic hydrocarbon groups and the aromatic hydrocarbon groups with at least one selected from a hydroxy group, a carboxyl group, an ether group and an ester group.

The lactone ring structure represented by the formula (8) is formed by copolymerizing a monomer group containing, for example, methyl methacrylate (MMA) and methyl 2-(hydroxymethyl)acrylate (MHMA) and then subjecting adjacent MMA unit and MHMA unit in the resultant copolymer to dealcoholization and cyclocondensation. In this case, $R^3$ is H, and $R^4$ and $R^5$ each are $CH_3$.

The following formula (9) shows a glutarimide structure and a glutaric anhydride structure.

[Chemical Formula 9]

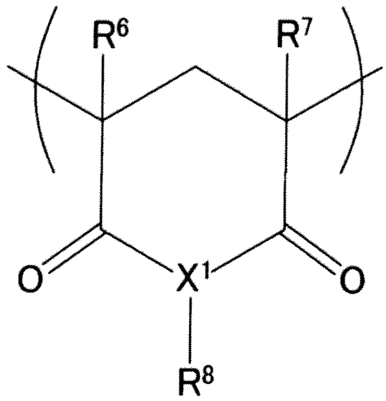

(9)

In the formula (9), $R^6$ and $R^7$ each independently represent a hydrogen atom or a methyl group, and $X^1$ is an oxygen atom or a nitrogen atom. When $X^1$ is an oxygen atom, $R^8$ is not present. When $X^1$ is a nitrogen atom, $R^8$ is a hydrogen atom, a straight-chain alkyl group having carbon numbers of 1 to 6, a cyclopentyl group, a cyclohexyl group or a phenyl group.

When $X^1$ is a nitrogen atom, the ring structure represented by the formula (9) is a glutarimide structure. The glutarimide structure is formed, for example, by imidizing a (meth)acrylic acid ester polymer with an imidizing agent such as methylamine.

When $X^1$ is an oxygen atom, the ring structure represented by the formula (9) is a glutaric anhydride structure. The glutaric anhydride structure is formed, for example, by intra-molecule dealcoholization and cyclocondensation of a copolymer of (meth)acrylic acid ester and (meth)acrylic acid.

The following formula (10) shows an N-substituted maleimide structure and a maleic anhydride structure.

[Chemical Formula 10]

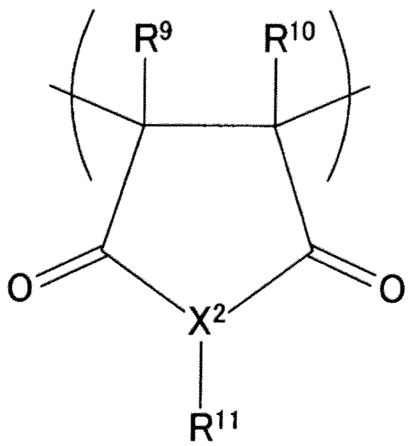

(10)

In the formula (10), $R^9$ and $R^{10}$ each independently represent a hydrogen atom or a methyl group, and $X^2$ is an oxygen atom or a nitrogen atom. When $X^2$ is an oxygen atom, $R^{11}$ is not present. When $X^2$ is a nitrogen atom, $R^{11}$ is a hydrogen atom, a straight-chain alkyl group having carbon numbers of 1 to 6, a cyclopentyl group, a cyclohexyl group or a phenyl group.

When $X^2$ is a nitrogen atom, the ring structure represented by the formula (10) is an N-substituted maleimide structure. An acrylic resin having an N-substituted maleimide structure in its main chain is formed, for example, by

copolymerizing N-substituted maleimide and (meth)acrylic acid ester.

When $X^2$ is an oxygen atom, the ring structure represented by the formula (10) is a maleic anhydride structure. An acrylic resin having a maleic anhydride structure in its main chain is formed, for example, by copolymerizing maleic anhydride and (meth)acrylic acid ester.

When the polymer (B-2) has a ring structure in its main chain, the content of the ring structure in the polymer (B-2) is not particularly limited but is usually 5 to 90 wt%, preferably 20 to 90 wt%. The content is further preferable in the following order: 30 to 90 wt%, 35 to 90 wt%, 40 to 80 wt%, and 45 to 75 wt%. The content of the ring structure can be determined by the method described in JP 2001-151814 A.

The polymer (B-2) may have an arbitrary structural unit as long as it has a positive intrinsic birefringence. For example, the polymer (B-2) may have a structural unit Y. In this case, the compatibility between the polymers (B-1) and (B-2) improves and thereby the optical film 1 is provided with excellent transparency.

The polymer (B-2) can be produced by a known method.

As an example, the polymer (B-2) having a lactone ring structure in its main chain can be obtained by heating a polymer (a) having a hydroxyl group and an ester group in its molecular chain in the presence of an arbitrary catalyst and thereby subjecting it to a lactone cyclocondensation reaction accompanied by dealcoholization.

The polymer (a) can be formed, for example, by polymerizing a monomer group containing a monomer represented by the following formula (11).

[Chemical Formula 11]

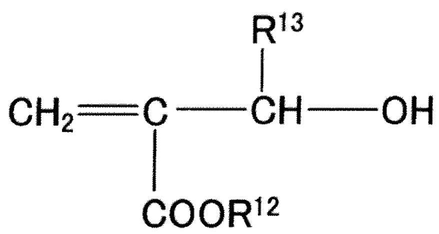

(11)

In the formula (11), $R^{12}$ and $R^{13}$ each independently represent a hydrogen atom or a group indicated as an example of the organic residue in the formula (8).

Specific examples of the monomer represented by the formula (11) include methyl 2-(hydroxymethyl)acrylate, ethyl 2-(hydroxymethyl)acrylate, isopropyl 2-(hydroxymethyl)acrylate, n-butyl 2-(hydroxymethyl)acrylate, and t-butyl 2-(hydroxymethyl)acrylate. Among these, methyl 2-(hydroxymethyl)acrylate and ethyl 2-(hydroxymethyl)acrylate are preferable, and methyl 2-(hydroxymethyl)acrylate (MHMA) is particularly preferable because it allows the optical film 1 to be provided with high transparency and heat resistance.

The structural unit formed through polymerization of such a monomer has, after its cyclization, an effect of allowing a polymer to have a positive intrinsic birefringence.

The monomer group that is used in forming the polymer (a) may contain two or more of the monomers represented by the formula (11).

The monomer group that is used in forming the polymer (a) may contain a monomer other than the monomers represented by the formula (11). Such a monomer is not particularly limited as long as it is copolymerizable with a monomer represented by the formula (11). For example, it is (meth)acrylic acid ester other than the monomers represented by the formula (11).

Examples of the (meth)acrylic acid ester include acrylic acid esters, such as methyl acrylate, ethyl acrylate, n-butyl acrylate, isobutyl acrylate, t-butyl acrylate, cyclohexyl acrylate, and benzyl acrylate; and methacrylic acid esters, such as methyl methacrylate, ethyl methacrylate, propyl methacrylate, n-butyl methacrylate, isobutyl methacrylate, t-butyl methacrylate, cyclohexyl methacrylate, and benzyl methacrylate. Particularly, methyl methacrylate (MMA) is preferable since it allows the optical film 1 to be provided with high transparency and heat resistance.

The monomer group that is used in forming the polymer (a) may contain two or more of these (meth)aciylic acid esters.

Additionally, the monomer group that is used in forming the polymer (a) may contain one or two or more of monomers, such as styrene, vinyl toluene, alpha-methylstyrene, acrylonitrile, methyl vinyl ketone, ethylene, propylene, and vinyl acetate.

The polymer (B-2) having a structural unit Y can be formed by polymerizing a monomer group containing the above-mentioned (meth)acrylic acid ester monomer and a monomer to become a structural unit Y through polymerization.

The polymer (B-2) having a structural unit Y and a ring structure in its main chain may be obtained by selecting the type of the (meth)acrylic acid ester contained in the monomer group and subjecting the formed polymer to cyclocondensation.

The polymer (B-1) is not particularly limited as long as it has a structural unit Y and a negative intrinsic birefringence.

The structural unit Y has an effect of considerably improving the wavelength dispersion of birefringence in the polymer (B-1) having the unit in its main chain (see Tables 6, 12, 16 and 27 in Examples of the present application). Therefore, a combination of the polymers (B-1) and (B-2) increases the degree of freedom in controlling the reverse wavelength dispersion. When the polymer (B-2) is a (meth)acitlic polymer, particularly, a (meth)acrylic polymer having a lactone ring structure or a glutarimide structure in its main chain (as described above, these polymers have very low wavelength dispersion of birefringence), and the degree of freedom in controlling the reverse wavelength dispersion of the optical film 1 further increases.

In the case of the combinations of resins disclosed in JP 2001-337222 A, the difference between both resins in wavelength dispersion of birefringence is not so great. Thus, it is not possible to obtain such an effect that is obtained in the optical film of the present invention.

Since the structural unit Y has an effect of considerably improving the wavelength dispersion of birefringence in the polymer (B-1), the polymer (B-1) exhibits high wavelength dispersion of birefringence even when the structural unit Y accounts for a lower percentage of all the structural units of the polymer (B-1). The polymers used for conventional optical members, such as polycarbonate or polystyrene, exhibit only a wavelength dispersion that falls into the range of approximately 0.95 to 1.15 in terms of the R/R0 value in the visible light range described in Examples of the present application, even if they are homopolymers.

With respect to the reason why the structural unit Y considerably improves the wavelength dispersion of birefringence in a polymer, the present inventors surmise that the state of the absorption spectrum of the structural unit Y in the wavelength range of 300 to 450 nm contributes significantly thereto.

A birefringence is produced by refractive index properties, specifically, anisotropy of the refractive index, of a polymer. The refractive index properties of a polymer are governed by those of the structural units composing the polymer. For example, when the polymer has two or more structural units, the refractive index properties of the polymer are determined by a balance between the refractive index properties of the respective structural units.

It is believed that the change in refractive index properties of a structural unit with respect to light in a certain wavelength range is associated with that in absorption spectrum of the structural unit with respect to light in the wavelength range. Specifically, a large change in absorption spectrum of a structural unit in a certain wavelength range results in a large change in refractive index properties of the structural unit in the wavelength range and thereby the wavelength dispersion of birefringence in the structural unit improves. This is deduced from the following: a formula $n^2=\varepsilon e$ (this formula is obtained based on a wave equation of electromagnetic wave derived from Maxwell field equations) that indicates the relationship between a refractive index n and a dielectric constant $\varepsilon e$ of a material that exhibits the refractive index, and a relational expression ($\varepsilon e=1+\chi$) between the dielectric constant $\varepsilon e$ and electric susceptibility $\chi$, as well as the facts that the electric susceptibility $\chi$ is indicated by a formula $\chi=P/\varepsilon_0 E$ (P: polarization, E: electric field, and $\varepsilon_0$: vacuum permittivity), the polarization P is defined by dipole moment per unit volume, the square of the dipole moment is proportional to oscillator strength, and the oscillator strength is proportional to an integrated absorption coefficient, which is a total of molar extinction coefficient.

The reverse wavelength dispersion is a characteristic such that the birefringence decreases as the wavelength of light becomes shorter, at least in the visible light range (the wavelength range of approximately 380 to 750 nm). That is, high wavelength dispersion of birefringence in a structural unit corresponds to a large change in refractive index properties of the structural unit in the visible light range.

Generally, the structural unit of a polymer has an absorption peak in the ultraviolet region. When it has an absorption peak in a position well distant from the visible light range, the absorption spectrum of the structural unit should be substantially constant in the visible light range without being affected by the peak. That is, in this case, the structural unit has substantially uniform refractive index properties in the visible light range, and thereby the polymer containing the unit has a smaller change in refractive index properties, which results in a lower wavelength dispersion of birefringence. In contrast, when the structural unit has an absorption peak in a position close to the visible light range or in a range of very short wavelengths even in the visible light range, the base of the peak falls into the visible light range and therefore the absorption spectrum of the structural unit varies significantly in the visible light range. In other words, in this case, the refractive index properties of the structural unit vary significantly in the visible light range and thereby the refractive index properties of the polymer containing the unit vary significantly, which results in a high wavelength dispersion of birefringence.

The state of absorption spectrum of the structural unit in the wavelength range of 300 to 450 nm strongly affects such a change in refractive index properties of the structural unit in the visible light range. Specifically, although it is necessary that the maximum peak of the absorption spectrum is not present in the visible light range of 450 nm and higher, it is believed that when the maximum value of the molar extinction coefficient in the wavelength range of 300 to

450 nm is a certain degree or higher, the structural unit having such an absorption spectrum improves considerably the wavelength dispersion of birefringence of a polymer containing the unit. However, how high the maximum value of the molar extinction coefficient specifically needs to be is an item that will be examined from now on.

The maximum value of the absorption spectrum of the structural unit in the wavelength range of 300 to 450 nm can be determined by measuring the ultraviolet-visible absorption spectrum of a polymer composed of the structural unit using a ultraviolet-visible spectrophotometer or by carrying out predictive calculation using a molecular orbital method with respect to the structural unit or a monomer to become the structural unit through polymerization.

Predictive calculation of the molar extinction coefficient was carried out applying the molecular orbital method to respective monomers (vinylcarbazole, vinylanthracene and dibenzofulvene) that become, through polymerization, a vinylcarbazole unit, a vinylanthracene unit and a dibenzofulvene unit, respectively. As a result, none of the monomers had the peak of the absorption spectrum in the visible light range of 450 nm and higher and all the monomers had the maximum values of the molar extinction coefficient of at least 3000 (mol/cm) in the wavelength range of 300 to 450 nm. Furthermore, the same calculation was carried out for styrene, which is a structural unit hardly improving the wavelength dispersion of birefringence of a polymer. As a result, styrene had the maximum value of the molar extinction coefficient of 100 (mol/cm) or lower in the wavelength range of 300 to 450 nm.

The predictive calculation was carried out in the following procedure. First, with respect to a target monomer, a model compound was produced using Builder of Materials Studio, which is a software manufactured by Accelrys Software Inc., and the most stable structure was searched using the density functional molecular orbital calculation software DMol3. In searching for the most stable structure, as a calculation condition, GGA/BLPY was defined as a functional. Subsequently, using the most stable structure thus obtained, the ultraviolet-visible absorption spectrum was calculated with a semiempirical molecular orbital calculation software. The spectrum was calculated using VAMP manufactured by Accelrys Software Inc. as the software, with ZINDO/INDO/1 being assigned to the Hamiltonian.

The above explanation of the reason why the structural unit Y considerably improves the wavelength dispersion of birefringence of a polymer also is applied to the molecular structure X having a similar molecular structure.

An aromatic ring increases the photoelastic coefficient of a polymer containing the ring. Accordingly, in order to obtain an optical film with excellent optical properties, particularly, an optical film suitable for an image display apparatus, it is desirable to reduce the content of the aromatic ring in the film as much as possible. Some structural units Y have an aromatic ring in the molecular structure. However, the polymer (B-1) having such a structural unit Y exhibits a high wavelength dispersion even when the content of the structural unit Y in the polymer is small, and therefore an optical film with a high degree of freedom in controlling the reverse wavelength dispersion is obtained with a reduced content of the aromatic ring in the polymer (B-1). That is, the optical film of the present invention containing a structural unit Y (a molecular structure X) prevents the photoelastic coefficient from increasing while having excellent optical properties of birefringence. The film is suitable for the use in an image display apparatus.

The structural unit Y represented by the formula (4) contains no aromatic ring, thus, the polymer (B-1) having this structural unit Y further prevents the photoelastic coefficient from increasing in the optical film. The effect that the structural unit Y (the molecular structure X) prevents the photoelastic coefficient of the optical film from increasing also is the same in the optical films 11, 21 and 31 described in Embodiment 2 and thereafter.

The polymer (B-1) may contain a structural unit other than the structural unit Y as long as it has a negative intrinsic birefringence. That is, the polymer (B-1) may be a copolymer of a monomer to become a structural unit Y through polymerization and another monomer. In this case, the content of the structural unit Y in the polymer (B-1) is preferably at least 20 wt% and more preferably at least 30 wt%.

For example, the polymer (B-1) may have a structural unit Y and a (meth)acrylic acid ester unit as its structural units. In this case, the compatibility with the polymer (B-2), which is a (meth)acrylic polymer, increases and therefore the optical film 1 is provided with excellent transparency.

The polymer (B-1) may have the aforementioned ring structure in its main chain. In this case, the optical film 1 is provided with further excellent heat resistance.

As specific examples, the polymer (B-1) may have a structural unit formed by polymerizing one of the following monomers: acrylic acid, methacrylic acid, acrylic acid alkyl ester (for example, methyl acrylate, ethyl acrylate, and carbazoyl ethyl acrylate), methacrylic acid alkyl ester (for example, methyl methacrylate, ethyl methacrylate, and carbazoyl ethyl methacrylate), acrylic acid aminoalkyl ester (for example, diethylamino ethyl acrylate), methacrylic acid aminoalkyl ester, monoester of acrylic acid and glycol, monoester of methacrylic acid and glycol (for example, hydroxy ethyl methacrylate), alkali metal salt of acrylic acid, alkali metal salt of methacrylic acid, ammonium salt of acrylic acid, ammonium salt of methacrylic acid, a quaternary ammonium derivative of acrylic acid aminoalkyl ester, a quaternary ammonium derivative of methacrylic acid aminoalkyl ester, a quaternary ammonium compound of diethylamino ethyl acrylate and methylsulfate, vinyl methyl ether, vinyl ethyl ether, alkali metal salt of vinyl sulfonic acid, ammonium salt of vinyl sulfonic acid, styrene sulfonic acid, styrene sulfonate, allylsulfonic acid, allylsulfonate, methallylsulfonic acid, methallylsulfonate, vinyl acetate, vinyl stearate, N-vinylacetamide, N-vinylformamide, acrylamide, methacrylamide, N-alkylacrylamide, N-methylolaciylamide, N,N-methylene bisacrylamide, glycol diacrylate, glycol dimethacrylate, divinylbenzene, and glycol diallyl ether.

Depending on the type of the structural unit Y (more specifically, depending on the type of the structural unit represented by the formula (4)), the polymer (B-1) may be water soluble.

When the polymer (B-1) is not water soluble, its weight average molecular weight is, for example, 50,000 to 1,500,000, preferably 80,000 to 1,200,000, and more preferably 100,000 to 900,000.

When the polymer (B-1) is water soluble, the K-value to serve as an index of the molecular weight is, for example, 10 to 120, preferably 25 to 95, and more preferably 30 to 85. The K-value is a value measured by the Fikentscher method.

The method of producing the polymer (B-1) is not particularly limited, and it can be produced by a known method. For example, a monomer group containing monomers to become the structural unit Y through polymerization may be polymerized by a known method.

The monomers to become the structural unit Y through polymerization are, for example, those represented by the following formulae (12) to (15).

[Chemical Formula 12]

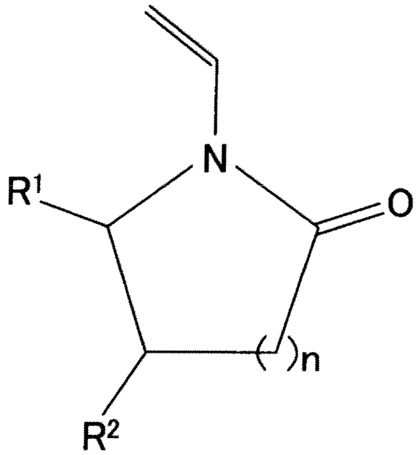

(12)

[Chemical Formula 13]

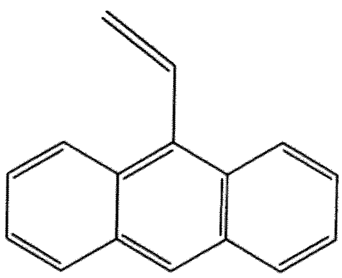

(13)

[Chemical Formula 14]

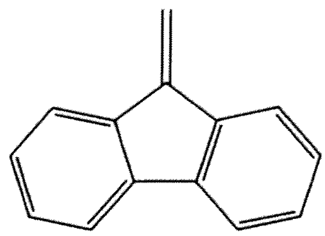

(14)

[Chemical Formula 15]

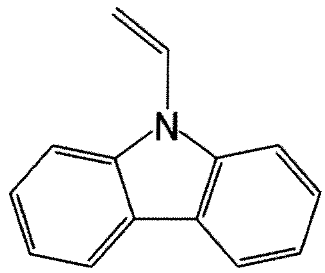

(15)

The monomer represented by the formula (12) is vinyl lactam, where n is a natural number in the range of 1 to 4, and $R^1$ and $R^2$ each independently represent a hydrogen atom or a methyl group.

The monomer represented by the formula (13) is vinylanthracene, the monomer represented by the formula (14) is dibenzofulvene, and the monomer represented by the formula (15) is vinylcarbazole. In the monomer represented by the formula (12), (13) or (15), a vinyl group, which is a polymerizable group, is bonded to a molecular structure X. In the monomer represented by the formula (14), a methylene group, which is a polymerizable group, is bonded to a molecular structure X.

Preferably, at least one selected from a mixture of hydrogen peroxide and metal salt, an azo compound, and organic peroxide is used as a polymerisation initiator when the polymer (B-1) is polymerized.

Examples of the azo compound include 2,2'-azobis(isobutyronitrile), 2,2'-azobis(2-methylbutyronitrile), 2,2'-azobis(2,4-dimethylvaleronitrile), 2,2'-azobis(4-methoxy-2,4-dimethylvaleronitrile), 2,2'-azobis(isobutyric acid)dimethyl, 4,4'-azobis(4-cyanovaleric acid), 2,2'-azobis(2-methylpropionamidine) dihydrochloride, 2,2'-azobis[N-(2-carboxvethyl)-2-methylpropionamidine]hydrate, 2,2'-azobis[2-(2-imidazolin-2-yl)propane]dihydrochloride, 2,2'-azobis[2-(2-imidazolin-2-yl)propane]disulfate dihydrate, and 1,1'-azobis(cyclohexane-1-carbonitrile). Two or more of the azo compounds may be used as the polymerization initiator.

Among these azo compounds, 2,2'-azobis(2-methylbutyronitrile), 2,2'-azcrbis(isobutyric acid)dimethyl, and 2,2'-azobis(2-methylpropionamidine) dihydrochloride are preferable.

Examples of the organic peroxide include benzoyl peroxide, dicumyl peroxide, 2,5-dimethyl-2,5-di(t-butylperoxy)hexane, 1,1'-di-t-butylperoxy-3,3,5-trimethylenecyclohexane, 1,3-di-(t-butylperoxy)-diisopropylbenzene, di-t-butyl peroxide, t-butyl hydroperoxide, t-butylperoxy-2-ethylhexanoate, t-butyl peroxypivalate, t-amyl peroxy-2-ethylhexanoate, and t-amyl hydroperoxide. Two or more of the organic peroxides may be used as the polymerization initiator.

Among these organic peroxides, t-butyl hydroperoxide and t-amyl peroxy-2-ethylhexanoate are preferable and t-amyl peroxy-2-ethylhexanoate is particularly preferable.

The concentration of the polymerization initiator in the polymerization system of the polymer (B-1) may be adjusted according to the type and concentration of the monomer to be polymerized and is not particularly limited. The concentration of the polymerization initiator is, for example, 0.001 part by weight to 3 parts by weight and preferably 0.005 part by weight to 2 parts by weight, per 100 parts by weight of monomer.

As required, a chain transfer agent, a pH adjuster or a buffer may be added to the polymerization system.

The polymerization solvent is not particularly limited. Examples thereof include a ketone-containing solvent (for example, a mixed solvent of acetone and toluene), an ester solvent (for example, ethyl acetate or butyl acetate), and a mixed solvent thereof. For the polymerization of the water-soluble polymer (B-1), water or lower alcohol (for example, methyl alcohol, ethyl alcohol, isopropyl alcohol or diethylene glycol) may be used as the polymerization solvent.
The polymerization temperature may be adjusted according to the type of the monomer to be polymerized and is not particularly limited. The temperature is, for example, 40°C to 100°C, preferably 50°C to 95°C, and more preferably 60°C to 90°C.
The mixing ratio of the polymer (B-1) and the polymer (B-2) in the resin (A) cannot be described simply, since it varies according to, for example, the absolute value of the intrinsic birefringence of each polymer or the degree of the reverse wavelength dispersion that is desired for the optical film 1. The mixing ratio is, for example, in the range of (B-1):(B-2) = 1:99 to 99:1, preferably in the range of (B-1):(B-2) = 10:90 to 90:10, and more preferably in the range of (B-1):(B-2) = 20:80 to 80:20, in terms of a weight ratio. In these ranges, the degree of freedom in controlling the reverse wavelength dispersion is increased and thereby the optical film 1 can be provided with a good reverse wavelength dispersion suitable for the use thereof.
The resin (A) in this embodiment may contain two or more of the polymers (B-1) or two or more of the polymers (B-2).
When the polymer (B-2) is a (meth)acrylic polymer, the total content of the (meth)acrylic polymer in the resin (A) is preferably at least 50 wt%.
The resin (A) in this embodiment may contain an arbitrary polymer other than the polymers (B-1) and (B-2) as long as an optical film that exhibits the reverse wavelength dispersion is obtained.
Some structural units Y exhibit very strong hygroscopicity. Therefore, it is difficult for the resin (A) to form a layer by itself, depending on the type of the structural unit Y of the polymer (B-1), the content of the structural unit Y in the polymer (B-1), and the content of the polymer (B-1) in the resin (A). In this case, the resin (A) may contain a polymer (a binder polymer) to serve as a binder for the polymer (B-1) having a structural unit Y Preferably, the binder polymer is a polymer whose intrinsic birefringence is close to 0, that is, a polymer that hardly exhibits a birefringence through stretching. Such a binder polymer realizes easy control of the optical properties of the optical film 1.
When the resin (A) contains a binder polymer, the mixing ratio of the polymer (B-1) and the binder polymer in the resin (A) is, for example, in the range of (B-1):binder polymer = 10:90 to 70:30 and preferably in the range of (B-1): binder polymer = 20:80 to 60:40, in terms of weight ratio.
The content of a polymer contained in the resin (A) and that of a structural unit in the polymer is determined by a known technique, for example, $^1$H nuclear magnetic resonance ($^1$H-NMR) or infrared spectroscopy (IR).
The optical film 1 may have an arbitrary layer other than the layer 2 as required.
The method of producing the optical film 1 is not particularly limited. The optical film 1 can be produced according to a known technique. For example, the resin (A) containing the polymers (B-1) and (B-2) is shaped into a film. Then, the resultant film is subjected to stretching (typically, uniaxial stretching or sequential biaxial stretching) in a predetermined direction. This stretching orients the molecular chains of the polymers contained in the resin (A), and thereby the layer 2 and the optical film 1 composed of the layer 2 are formed.
The resin (A) can be shaped into a film by a known technique such as a casting method or a melt molding method (for example, melt-extrusion molding or press molding).

[Embodiment 2]

Fig. 2 shows another example of the optical film of the present invention. The optical film 11 shown in Fig. 2 is composed of one layer 12, and the layer 12 is formed of a resin (A) containing a polymer (B-1) having a structural unit Y. The polymer (B-1) used in this embodiment has the structural unit Y as a structural unit having an effect of allowing the polymer to have a negative intrinsic birefringence and further a structural unit Z having an effect of allowing the polymer to have a positive intrinsic birefringence. Hereinafter, the polymer (B-1) used in this embodiment is referred to as a polymer (B-3).
When the polymer (B-3) is subjected to orientation, the birefringences derived from the respective structural units Y and Z are cancelled by each other. The degree of this cancellation of the birefringences varies with the wavelength, therefore, the reverse wavelength dispersion of birefringence, for example, the reverse wavelength dispersion of retardation, are produced.
Although the optical film 11 is a single layer, it exhibits the reverse wavelength dispersion. Therefore, while the thickness of the film is reduced, desired optical properties is obtained. This makes it possible to achieve further reductions in size and weight of an image display apparatus provided with the optical film 11. Furthermore, as compared to an optical film whose reverse wavelength dispersion is provided by stacking a plurality of layers together, the optical film 11 has a higher productivity since it is not necessary to adjust the lamination angles of the respective layers.
From the viewpoint of the orientation of the polymer (B-3), the optical film 11 is a member formed by orienting

the resin (A) containing the polymer (B-3). The orientation of the resin (A) is realized by stretching the resin (A) shaped into a film.

The polymer (B-3) is not particularly limited as long as it has the structural units Y and Z.

The structural unit Z is not particularly limited as long as it has an effect of allowing the polymer (B-3) to have a positive intrinsic birefringence. The structural unit Z is, for example, at least one selected from a (meth)acrylic acid ester unit, a ring structure that is a derivative of a (meth)acrvlic acid ester unit, and a cycloolefin unit. Preferably, the structural unit Z is at least one selected from the (meth)acrylic acid ester unit and the ring structure that is a derivative of the unit. In this case, the degree of freedom in controlling the reverse wavelength dispersion in the optical film 11 increases.

The structural unit Y has a strong effect of improving the wavelength dispersion of birefringence in the polymer (B-3). In contrast, the (meth)acrylic acid ester unit and the ring structure that is a derivative of the unit each have a reduced effect of improving the wavelength dispersion of birefringence in the polymer (B-3). Thus, a combination of structural units that are different from each other in degree to which they improve the wavelength dispersion of the polymer (B-3) increases the degree of freedom in controlling the reverse wavelength dispersion.

In the combination of molecular chains disclosed in JP 2001-235622 A, the difference between the wavelength dispersion of the both is not so large. Thus, it is not possible for the combination to obtain such an effect as in the optical film of the present invention using the polymer (B-3) having the structural unit Y.

The ring structure is, for example, a ring structure described as an example for explaining the polymer (B-2) in Embodiment 1. Hereinafter, this ring structure described as an example is referred to simply as a "ring structure".

When the total content of the (meth)acrylic acid ester unit and the ring structure in the polymer (B-3) is at least 50 wt%, the polymer (B-3) is a (meth)acrylic polymer. In this case, the optical film 11 is provided with excellent optical properties as well as excellent various properties such as mechanical strength, molding processability, and surface hardness.

Preferably, the polymer (B-3) has both the (meth)acrylic acid ester unit and the ring structure as the structural unit Z. That is, it is preferable that the polymer (B-3) be a (meth)acrylic polymer having a ring structure in its main chain. The structural unit containing the ring structure has an effect of allowing the polymer (B-3) having the unit to have a large positive intrinsic birefringence when it is oriented. Therefore, a combination with the structural unit Y increases the degree of freedom in controlling the reverse wavelength dispersion in the optical film 11.

The ring structure in main chain of the polymer (B-3) increases the Tg of the polymer (B-3) and the resin (A) containing the polymer (B-3), and realizes she optical film 11 with high heat resistance.

The polymers (B-3) having the ring structure in its main chain and the resin (A) containing the polymer (B-3) each have the Tg of, for example, at least 110°C. Depending on the type of the ring structure, the content of the ring structure in the polymer (B-3), and the content of the polymer (B-3) in the resin (A), the Tg is at least 115°C, at least 120°C, and further at least 130°C.

As described in Embodiment 1, the ring structure is preferably at least one selected from a lactone ring structure and a glutarimide structure and more preferably a lactone ring structure. These ring structures each have an effect of allowing the polymer (B-3) to have a positive intrinsic birefringence but the wavelength dispersion thereof is very low. Therefore, a combination with the structural unit Y further increases the degree of freedom in controlling the reverse wavelength dispersion of the optical film 11.

The structural unit Y is not particularly limited but is preferably a unit represented by the formula (4) or an unsaturated monomer unit. In other words, it is preferable that the polymer (B-3) have a unit represented by the formula (4) or an unsaturated monomer unit as a structural unit having an effect of allowing the polymer to have a negative intrinsic birefringence.

The polymer (B-3) may be a random copolymer in which the structural units Y and Z are arranged randomly in the main chain or a block copolymer including a block composed of the structural unit Y and a block composed of the structural unit Z. Furthermore, it may be a graft copolymer in which to the main chain having one structural unit (for example, the structural unit Y) selected from the structural units Y and Z, a side chain having the other structural unit (for example, the structural unit Z) is bonded.

The polymer (B-3) may have two or more of the structural units Y

The polymer (B-3) may have an arbitrary structural unit other than the structural units Y and Z as long as an optical film that exhibits the reverse wavelength dispersion is obtained.

The polymer (B-3) can be produced by a known method.

The ratio of the contents of the structural units Y and Z in the polymer (B-3) cannot be described simply. This is because it varies according to the degree to which each structural unit acts on the intrinsic birefringence of the polymer (B-3) or the degree of the reverse wavelength dispersion desired for the optical film 11. The ratio is, for example, structural unit Y:structural unit Z = 1:99 to 38:62 in terms of a weight ratio. In this range, the degree of freedom in controlling the reverse wavelength dispersion increases and thereby the optical film 11 with a wavelength dispersion that is good and suitable for the use thereof is obtained.

The content of the polymer (B-3) in the resin (A) is not particularly limited. The content is generally at least 50 wt%, preferably at least 60 wt%, and more preferable at least 70 wt%. These ranges of the content allow the effects of the present invention to be obtained reliably.

The resin (A) in this embodiment may contain two or more of the polymers (B-3).

The optical film 11 may have an arbitrary layer other than the layer 12 as required.

The method of producing the optical film 11 is not particularly limited. The optical film 11 can be produced according to a known technique. For example, the resin (A) containing the polymer (B-3) is shaped into a film, then, the resultant film is subjected to stretching (typically, uniaxial stretching or sequential biaxial stretching) in a predetermined direction. The stretching orients the molecular chain of the polymer contained in the resin (A), and thereby the layer 12 and the optical film 11 composed of the layer 12 are formed.

The resin (A) can be shaped into a film by a known technique such as a casting method or a melt molding method (for example, melt-extrusion molding or press molding).

[Embodiment 3]

Fig. 3 shows another example of the optical film of the present invention. The optical film 21 shown in Fig. 3 has a structure including two layers 22 and 23 stacked together. The layer 22 is formed of a resin (A) containing a polymer (B-1) having a structural unit Y and the resin (A) has a negative intrinsic birefringence. The layer 23 is formed of a resin (C) having a positive intrinsic birefringence.

The optical film 21 has a structure in which two types of layers (a layer 22 and a layer 23), one of which has a positive intrinsic birefringence and the other of which has a negative intrinsic birefringence, are stacked together. Such a layered structure generates a phenomenon in which the birefringences of both layers with respect to incident light are cancelled by each other. The level to which the birefringences are cancelled by each other varies with the wavelength, thus, the optical film 21 exhibits the reverse wavelength dispersion.

In the optical film 21, the layers 22 and 23 each are disposed independently, and therefore it is not necessary to consider the compatibility between two kinds of polymers, one kind of which has a positive intrinsic birefringence and the other kind of which has a negative intrinsic birefringence, or the compatibility between two kinds of structural units, one kind of which provides a polymer with a positive intrinsic birefringence and the other kind of which provides a polymer with a negative intrinsic birefringence. This allows the respective layers to have wide composition ranges. According to this, an optical member is obtained that has a high degree of freedom in optical design including a high degree of freedom in controlling the reverse wavelength dispersion.

In the layers 22 and 23, birefringences are produced through orientation of the polymers contained in the layers. From this viewpoint, the layer 22 is a layer formed by orienting the resin (A), while the layer 23 is a layer formed by orienting the resin (C). In order to orient the resins (A) and (C), the resins (A) and (C) that have been shaped into films are stretched.

The resin (C) is not particularly limited as long as it has a positive intrinsic birefringence. For example, it may contain a polymer having a positive intrinsic birefringence. An example of the polymer having a positive intrinsic birefringence is the above-mentioned polymer (B-2).

The polymer (B-2) is preferably a (meth)acrylic polymer and this allows the optical film 21 to have an increased degree of freedom in controlling the reverse wavelength dispersion. The layer 22 is formed of a resin (A) containing a polymer (B-1) having a structural unit Y. The wavelength dispersion of birefringence that is exhibited by such a layer is considerably higher than that of birefringence that is exhibited by the layer 23 formed of a resin (C) containing the polymer (B-2), which is a (meth)acrylic polymer. Thus, a combination of two types of independent layers that are significantly different from each other in wavelength dispersion of birefringence increases the degree of freedom in controlling the reverse wavelength dispersion in the optical film 21.

Even when the layers 22 and 23 are formed based on the combination of resins disclosed in JP 2001-337222 A (even when, for example, the layer 23 is formed with polynorbornene and the layer 22 is formed with a styrene polymer), the wavelength dispersions of birefringence that are exhibited by the respective layers are not so much different from each other. Therefore, it is not possible to obtain such an effect as one obtained by a combination of the layer 23 formed of the resin (C) containing the polymer (B-2), which is a (meth)acrylic polymer, and the layer 22 formed of the resin (A) containing the polymer (B-1).

The polymer (B-2) is preferably a (meth)acrylic polymer having a ring structure in its main chain. The polymer (B-2) having a ring structure in its main chain increases the absolute value of the intrinsic birefringence of the layer 23. Accordingly, a combination with the layer 22 increases the degree of freedom in controlling the reverse wavelength dispersion in the optical film 21.

As described in Embodiment 1, the polymer (B-2) having a ring structure in its main chain increases the Tg of the polymer (B-2) and the resin (C) containing the polymer, and thereby improves the heat resistance of the layer 23 and the optical film 21. The degree to which the ring structure increases the Tg is as described above.

As described in Embodiment 1, the ring structure is preferably at least one selected from a lactone ring structure and a glutarimide structure and more preferably a lactone ring structure. These ring structures each have an effect of allowing the polymer (B-2) to have a positive intrinsic birefringence but the wavelength dispersion thereof are very low. Therefore, a combination with the layer 22 containing the polymer (B-1) further increases the degree of freedom in controlling the reverse wavelength dispersion of the optical film 21.

Other preferable conditions for the polymer (B-2) are the same as those for the polymer (B-2) described in Embodiment 1.

The resin (C) containing the polymer (B-2) may contain a polymer other than the polymer (B-2) as long as it has a positive intrinsic birefringence.

The polymer (B-1) used in this embodiment is identical to the polymer (B-1) described in Embodiment 1.

The resin (A) used in this embodiment is not particularly limited as long as it contains the polymer (B-1) having a structural unit Y and has a negative intrinsic birefringence. For example, the resin (A) may contain a polymer other than the polymer (B-1).

Some structural units Y exhibit very strong hygroscopicity. Therefore, it may be difficult for the polymer (B-1) to form a layer by itself, depending on the type of the structural unit Y of the polymer (B-1) and the content of the structural unit Y in the polymer. In this case, the resin (A) may contain a polymer (a binder polymer) to serve as a binder for the polymer (B-1). Preferably, the binder polymer is a polymer whose intrinsic birefringence is close to 0, that is, a polymer that does not exhibit a birefringence through stretching. Such a binder polymer makes it easy to control the optical properties of the layer 22.

The method of forming the optical film 21 is not particularly limited. An example of the forming method is one in which the layer 22 and the layer 23 produced individually are laminated with each other. For example, the resin (A) containing the polymer (B-1) is shaped into a film, then, the resultant film is subjected to stretching (typically, uniaxial stretching or sequential biaxial stretching) in a predetermined direction. The stretching orients molecular chain of the polymer contained in the resin (A) to form the layer 22. Separately, the resin (C) containing the polymer (B-2) is shaped into a film, and then, the resultant film is subjected to stretching in a predetermined direction. The stretching orients the molecular chain of the polymer contained in the resin (C) to form the layer 23. Subsequently, both the resultant layers are laminated together and thus the optical film 21 shown in Fig. 3 is formed. The layer 22 and the layer 23 can be laminated together according to a known technique. Both the layers may be bonded to each other with an acrylic adhesive. The resins (A) and (C) each can be shaped into a film by a known technique such as a casting method or a melt molding method (for example, melt-extrusion molding or press molding).

Another example of the forming method is a method in which a layered body including a film that is to be a precursor of the layer 22 and that has not been stretched yet (an unstretched film or a provisionally stretched film) and a film that is to be a precursor of the layer 23 and that has not been stretched yet is stretched in a predetermined direction. This stretching orients the molecular chains of the polymers (B-1) and (B-2) contained in the respective precursors and thus the optical film 21 is obtained that is a layered body of the layer 22 and the layer 23. The layered body of the precursors may be formed, for example, by stacking a film formed of the resin (A) and a film formed of the resin (C) together or by co-extrusion molding of the resin (A) and the resin (C). Or, it may be formed by applying a solution, in which a resin to be a precursor of one of the layer 22 and the layer 23 is dissolved, to a film of a precursor of the other layer and then by drying the coating film. As a specific example, there is a method in which a solution containing the polymer (B-1) having the structural unit Y is applied onto a base film formed of a (meth)acrylic polymer, a cycloolefin polymer, or a cellulose derivative, the whole is then dried, and the resultant layered body is stretched in a predetermined direction.

The layered states of the layers 22 and 23 (for example, the layered pattern of the layers 22 and 23 or the angle between the orientation axis of the layer 22 and that of the layer 23, which is viewed from a direction perpendicular to the surface of the optical film 21) are not particularly limited and can be selected suitably according to optical design items. When the layers 22 and 23 are stacked together in such a manner that the respective stretching directions substantially coincide with each other, the optical film 21 exhibits the highest reverse wavelength dispersion.

The number of the layers 22 and 23 of the optical film 21 is not particularly limited. The layer 22 and the layer 23 seed not be in contact with each other.

The optical film 21 may have a layer other than the layers 22 and 23 as required.

[Embodiment 4]

Fig. 4 shows another example of the optical film of the present invention. The optical film 31 shown in Fig. 4 is composed of one layer 32, and the layer 32 is formed of a resin (A) containing a polymer (B-4) having a structural unit modified by a molecular structure X.

When the polymer (B-4) is oriented, since the degree of modification by the molecular structure X is different between the structural units, the birefringences derived from the respective structural units are cancelled by each other.

The degree of this cancellation of the birefringences varies with the wavelength, and this results in the reverse wavelength dispersion of birefringence, for example, the reverse wavelength dispersion of retardation.

The polymer (B-4) can be formed by a known technique. For example, a compound in which a ligand that can be bonded to a structural unit to be modified is bonded to the molecular structure X is allowed to react with a polymer having the structural unit. When the polymer is a cellulose derivative such as TAC, the ligand is, for example, a hydroxyl group. When the molecular structure X is a structure represented by the formula (1), the above-mentioned compound is, for example, acid chloride of 5-oxopyrrolidine-2-carboxylic acid. In order to form acid chloride, thionyl chloride can be used.

The optical film 31 may have a layer other than the layer 32 as required.

The method of producing the optical film 31 is not particularly limited and it can be produced according to a known technique. For example, the resin (A) containing the polymer (B-4) is shaped into a film, then, the resultant film is subjected to stretching (typically, uniaxial stretching or sequential biaxial stretching) in a predetermined direction. The stretching orients the molecular chain of the polymer contained in the resin (A), and thereby the layer 32 and the optical film 31 composed of the layer 32 are formed.

The resin (A) can be shaped into a film by a known technique such as a casting method or a melt molding method (for example, melt-extrusion molding or press molding).

[Use of Optical Film]

An optical film of the present invention exhibits the reverse wavelength dispersion. That is, the optical film of the present invention exhibits optical properties such that the birefringence (or retardation) decreases as the wavelength becomes shorter, at least in the visible light range. The use of such a broadband optical film makes it possible to produce an image display apparatus with excellent display characteristics.

The optical film of the present invention may be made as, for example, a retardation plate or a $\lambda/4$ plate, which is one type of retardation plates, that is obtained by setting the retardation determined based on the resultant retardation to 1/4 the wavelength of light. Furthermore, the optical film of the present invention also can be made as an antireflection plate by being combined with another optical member such as a polarizing plate.

The optical film of the present invention may be made as a polarizer protective film. Particularly, from the reason described above, when the resin (A) has a molecular structure represented by the formula (1), the optical film is suitable as a polarizer protective film.

The optical film of the present invention may be used in combination with another optical member according to the use thereof.

The use of the optical film of the present invention is not particularly limited. The optical film of the present invention can be applied to the same use as that (for example, an image display apparatus such as LCD or OLED) of a conventional optical member.

EXAMPLES

Hereinafter, the present invention is described further in detail with reference to examples. The present invention is not limited to the examples described below.

[Production Example 1]

Fifteen parts by weight of methyl 2-(hydroxymethyl)acrylate (MHMA), 35 parts by weight of methyl methacrylate (MMA), and 50 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.03 part by weight of t-amylperoxyisononanoate (Luperox 570 (trade name), manufactured by Arkema Yoshitomi, Ltd.) was added as a polymerization initiator, and simultaneously a solution containing 0.06 part by weight of the above-mentioned t-amylperoxyisononanoate dissolved in 3.34 parts by weight of toluene was added dropwise over two hours so that the mixture was subjected to solution polymerization under reflux at about 105 to 110°C. Then the mixture further was aged for four hours.

To the resultant polymer solution, 0.1 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.

Subsequently, the polymer solution thus obtained was dried under reduced pressure at 240°C for one hour. Thus, a transparent polymer (B-2A) having a lactone ring structure in its main chain was formed.

[Production Example 2]

Fifteen parts by weight of MHMA, 25 parts by weight of MMA, 10 parts by weight of benzyl methacrylate, and 50 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.03 part by weight of t-amylperoxyisononanoate (Luperox 570 (trade name), manufactured by Arkema Yoshitomi, Ltd.) was added as a polymerization initiator, and simultaneously a solution containing 0.06 part by weight of the above-mentioned t-amylperoxyisononanoate dissolved in 3.34 parts by weight of toluene was added dropwise over six hours so that the mixture was subjected to solution polymerization under reflux at about 105 to 111°C. Then the mixture further was aged for two hours.

To the resultant polymer solution, 0.1 part by weight of a mixture of octyl phosphate and dioctyl phosphate was added as a cyclization catalyst. Then, under reflux at about 80 to 105°C, the mixture was subjected to a cyclocondensation reaction for two hours.

Subsequently, the polymer solution thus obtained was dried under reduced pressure at 240°C for one hour. Thus, a transparent polymer (B-2B) having a lactone ring structure in its main chain was formed.

Whether the intrinsic birefringence of the polymer (B-2B) thus formed was positive or negative was evaluated by determining the orientation angle of a stretched film composed of the polymer (B-2B) that was formed in the same manner as in Comparative Example 1. As a result, the polymer (B-2B) had a positive intrinsic birefringence.

[Production Example 3]

Ten parts by weight of vinylcarbazole, 18 parts by weight of MHMA, 72 parts by weight of MMA, and 80 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.1 part by weight of t-amylperoxyisononanoate (Luperox 570 (trade name), manufactured by Arkema Yoshitomi, Ltd.) was added as a polymerization initiator, and simultaneously a solution containing 0.2 part by weight of the above-mentioned t-amylperoxyisononanoate dissolved in 10 parts by weight of toluene was added dropwise over two hours so that the mixture was subjected to solution polymerization under reflux at about 105 to 110°C. Then the mixture further was aged for four hours.

To the resultant polymer solution, 0.9 part by weight of a mixture of octyl phosphate and dioctyl phosphate dissolved in 10 parts by weight of toluene was added. Then, the MHMA unit and the MMA unit in the polymer formed by the aforementioned polymerization were subjected to a cyclocondensation reaction under reflux for two hours.

Subsequently, the polymer solution thus obtained was dried under reduced pressure at 240°C for one hour. Thus, a transparent polymer (B-1A) having a vinylcarbazole unit in its main chain was formed. The resultant polymer (B-1A) had a lactone ring structure in its main chain. This ring structure was introduced for the purpose of improving the compatibility between the polymer (B-1A) and the polymer (B-2A) or (B-2B).

[Example 1]

Ten parts by weight of polymer (B-2A) produced in Production Example 1 and 20 parts by weight of polymer (B-1A) produced in Production Example 3 were dissolved in methyl isobutyl ketone. The resultant solution was stirred, so that the polymers (B-2A) and (B-1A) were mixed together uniformly. Subsequently, the resultant mixed solution was dried under reduced pressure at 240°C for one hour and thereby 30 parts by weight of solid resin was obtained.

Next, the resultant resin was subjected to press molding at 250°C with a press molding machine and thereby a film with a thickness of about 100 μm was formed. Subsequently, the film thus produced was subjected to uniaxial stretching at a stretching temperature of 138°C with a biaxial stretching apparatus (EX4, manufactured by Toyo Seiki Seisakusho, Ltd.) in such a manner that a stretching ratio of 2 was obtained in the MD direction. Thus, a stretched film with a thickness of 40 μm was obtained.

The wavelength dispersion of the retardation (an in-plane retardation) and the orientation angle of the resultant stretched film were evaluated with an automatic birefringence meter (KOBRA-WR, manufactured by Oji Scientific Instruments). The evaluation result of the wavelength dispersion is shown in Table 1 below. In Table 1 and the respective tables shown in the examples/comparative examples thereafter, with the retardation obtained with the measurement wavelength set at 590 nm being taken as a reference (R0), the ratios (R/R0) of retardation R and R0 at the other wavelengths also are shown together. Furthermore, the "in-plane retardation" shown in each table is a value per 100 μm of film thickness.

[Table 1]

| Measurement Wavelength (nm) | 447 | 499 | 547 | 590 (R0) | 630 | 750 |
|---|---|---|---|---|---|---|
| In-Plane Retardation (nm) | 23.3 | 29.4 | 32.6 | 34.5 | 35.9 | 39.2 |
| R/R0 | 0.68 | 0.85 | 0.95 | 1.00 | 1.04 | 1.14 |

As shown in Table 1, the stretched film obtained in Example 1 exhibited the reverse wavelength dispersion such that the retardation decreased as the wavelength of light became shorter, and the R/R0 varied significantly depending on the measurement wavelength.
The stretched film obtained in Example 1 had an orientation angle (φ) of -0.8°, that is, it had a positive intrinsic birefringence.

[Example 2]

A stretched film was produced in the same manner as in Example 1 except that the polymer (B-2B) produced in Production Example 2 was used instead of the polymer (B-2A). The wavelength dispersion of the retardation and the orientation angle of the stretched film thus produced were evaluated in the same manner as in Example 1. The evaluation result of the wavelength dispersion is shown in Table 2 below.
[Table 2]

| Measurement Wavelength (nm) | 447 | 499 | 547 | 590 (R0) | 630 | 750 |
|---|---|---|---|---|---|---|
| In-Plane Retardation (nm) | 38.9 | 43.5 | 46.3 | 48.8 | 50.2 | 52.6 |
| R/R0 | 0.80 | 0.89 | 0.95 | 1.00 | 1.03 | 1.08 |

As shown in Table 2, the stretched film obtained in Example 2 exhibited the reverse wavelength dispersion such that the retardation decreased as the wavelength of light became shorter, and the R/R0 varied significantly depending on the measurement wavelength.
The stretched film obtained in Example 2 had an orientation angle (φ) of 0.6°, that is, it had a positive intrinsic birefringence.

(Example 3]

Thirty five parts by weight of a solid resin was obtained in the same manner as in Example 1 except that 10 parts by weight of an acrylimide polymer (KAMAX T-240, manufactured by Rohm and Haas Company) was used instead of the polymer (B-2A) and the amount of the polymer (B-1A) produced in Production Example 3 to be used herein was 25 parts by weight. The acrylimide polymer used herein has an N-methyl-dimethylglutarimide unit and a methyl methacrylate unit as its structural units as shown in the following formula (16).
[Chemical Formula 16]

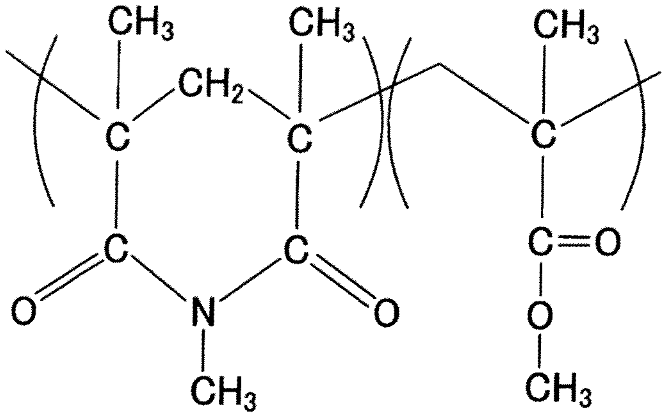

(16)

Next, the resultant resin was subjected to press molding at 250°C with a press molding machine and thereby a film with a thickness of approximately 100 μm was formed. Subsequently, the film thus produced was subjected to uniaxial stretching at a stretching temperature of 143°C with the above-mentioned biaxial stretching apparatus in such a manner that a stretching ratio of 2 was obtained in the MD direction. Thus, a stretched film with a thickness of 50 μm was obtained.

Next, the wavelength dispersion of the retardation and the orientation angle of the resultant stretched film were evaluated in the same manner as in Example 1. The evaluation result of the wavelength dispersion is shown in Table 3 below.

[Table 3]

| Measurement Wavelength (nm) | 447 | 499 | 547 | 590 (R0) | 630 | 750 |
|---|---|---|---|---|---|---|
| In-Plane Retardation (nm) | 54.6 | 65.8 | 75.0 | 76.8 | 78.8 | 80.3 |
| R/R0 | 0.71 | 0.86 | 0.98 | 1.00 | 1.03 | 1.05 |

As shown in Table 3, the stretched film obtained in Example 3 exhibited the reverse wavelength dispersion such that the retardation decreased as the wavelength of light became shorter, and the R/R0 varied significantly depending on the measurement wavelength.

The stretched film obtained in Example 3 had an orientation angle (φ) of -2.1°, that is, it had a positive intrinsic birefringence.

[Comparative Example 1]

Using only the polymer (B-2A) formed in Production Example 1, press molding and uniaxial stretching were carried out in the same manner as in Example 1 and thereby a stretched film of the polymer (B-2A) was obtained. The wavelength dispersion of the retardation and the orientation angle of the resultant stretched film were evaluated in the same manner as in Example 1. The evaluation result of the wavelength dispersion is shown in Table 4 below.

[Table 4]

| Measurement Wavelength (nm) | 447 | 499 | 547 | 590 (R0) | 630 | 750 |
|---|---|---|---|---|---|---|

(continued)

| | | | | | | |
|---|---|---|---|---|---|---|
| In-Plane Retardation (nm) | 241.4 | 224.5 | 225.8 | 225.2 | 224.6 | 222.3 |
| R/R0 | 1.07 | 1.00 | 1.00 | 1.00 | 1.00 | 0.99 |

As shown in Table 4, the stretched film obtained in Comparative Example 1 exhibited a wavelength dispersion such that the retardation increased as the wavelength of light became shorter, i.e. a wavelength dispersion similar to those of a birefringence member that was formed using a general polymer such as polycarbonate.
The stretched film obtained in Comparative Example 1 had an orientation angle (φ) of-0.7°, that is, it had a positive intrinsic birefringence.

[Comparative Example 2]

Using only the acrylimide polymer used in Example 3, press molding and uniaxial stretching were carried out in the same manner as in Example 1 and thereby a stretched film with a thickness of 50 μm was obtained. The wavelength dispersion of the retardation and the orientation angle of the resultant stretched film were evaluated in the same manner as in Example 1. The evaluation result of the wavelength dispersion is shown in Table 5 below.
[Table 5]

| Measurement Wavelength (nm) | 447 | 499 | 547 | 590 (R0) | 630 | 750 |
|---|---|---|---|---|---|---|
| In-Plane Retardation (nm) | 396.1 | 387.5 | 372.1 | 367.6 | 364.3 | 354.4 |
| R/R0 | 1.08 | 1.05 | 1.01 | 1.00 | 0.99 | 0.96 |

As shown in Table 5, the stretched film obtained in Comparative Example 2 exhibited a wavelength dispersion such that the retardation increased as the wavelength of light became shorter.
The stretched film obtained in Comparative Example 2 had an orientation angle (φ) of-0.8°, that is, it had a positive intrinsic birefringence.

[Comparative Example 3]

Using only the polymer (B-1A) formed in Production Example 3, press molding and uniaxial stretching were carried out in the same manner as in Example 1 and thereby a stretched film of the polymer (B-1A) was obtained. The wavelength dispersion of the retardation and the orientation angle of the resultant stretched film were evaluated in the same manner as in Example 1. The evaluation result of the wavelength dispersion is shown in Table 6 below.
[Table 6]

| Measurement Wavelength (nm) | 447 | 499 | 547 | 590 (R0) | 630 | 750 |
|---|---|---|---|---|---|---|
| In-Plane Retardation (nm) | 64.2 | 53.1 | 47.3 | 42.8 | 40.7 | 37.2 |
| R/R0 | 1.50 | 1.24 | 1.11 | 1.00 | 0.95 | 0.87 |

As shown in Table 6, the stretched film obtained in Comparative Example 3 exhibited a wavelength dispersion such that the retardation increased as the wavelength of light became shorter. The degree of the dispersion was considerably high as compared to that of a resin such as polycarbonate or polystyrene.

The stretched film obtained in Comparative example 3 had an orientation angle (φ) of 89.4°, that is, it had a negative intrinsic birefringence.

[Example 4]

The polymer (B-2A) produced in Production Example 1 was subjected to press molding at 250°C with a press molding machine and thereby a film with a thickness of approximately 70 μm was formed. Subsequently, the film thus produced was subjected to uniaxial stretching at a stretching temperature of 145°C with the above-mentioned biaxial stretching apparatus in such a manner that a stretching ratio of 2 was obtained in the MD direction. Thus, a stretched film (F1) with a thickness of 50 μm was obtained.

Separately, a stretched film (F2) with a thickness of 100 μm was obtained in the same manner as described above except that the polymer (B-1A) produced in Production Example 3 was used instead of the polymer (B-2A).

Next, with the stretched film (F1) and stretched film (F2) thus produced being used as a first layer and a second layer, respectively, both the films were laminated together while the stretching directions (stretching axes) of the respective films were aligned with each other. The wavelength dispersion of the retardation (in-plane retardation) and the orientation angle in the laminate of the stretched films thus obtained through laminating were evaluated in the same manner as in Example 1. The evaluation result of the wavelength dispersion is shown in Table 7 below.

[Table 7]

| Measurement Wavelength (nm) | 447 | 499 | 547 | 590 (R0) | 630 | 750 |
|---|---|---|---|---|---|---|
| In-Plane Retardation (nm) | 40.3 | 44.6 | 47.5 | 49.5 | 51.0 | 54.2 |
| R/R0 | 0.81 | 0.90 | 0.96 | 1.00 | 1.03 | 1.08 |

As shown in Table 7, the laminate of the stretched films produced in Example 4 exhibited the reverse wavelength dispersion such that the retardation decreased as the wavelength of light became shorter, and the R/R0 varied significantly depending on the measurement wavelength.

The laminate of the stretched films produced in Example 4 had an orientation angle (φ) of-0.8°, that is, it had a positive intrinsic birefringence.

[Example 5]

The polymer (B-2B) produced in Production Examples 2 was subjected so press molding at 250°C with a press molding machine and thereby a film with a thickness of approximately 70 μm was formed. Subsequently, the film thus produced was subjected to uniaxial stretching at a stretching temperature of 138°C with the above-mentioned biaxial stretching apparatus in such a manner that a stretching ratio of 2 was obtained in the MD direction. Thus, a stretched film (F3) with a thickness of 50 μm was obtained.

Separately, the polymer (B-1A) produced in Production Example 3 was subjected to press molding at 250°C with the press molding machine and thereby a film with a thickness of approximately 210 μm was formed. Subsequently, the film thus produced was subjected to uniaxial stretching at a stretching temperature of 138°C with the above-mentioned biaxial stretching apparatus in such a manner that a stretching ratio of 2 was obtained in the MD direction. Thus, a stretched film (F4) with a thickness of 150 μm was obtained.

Next, with the stretched film (F3) and stretched film (F4) thus produced being used as a first layer and a second layer, respectively, both the films were laminated together while the stretching directions of the respective films were aligned with each other. The wavelength dispersion of the retardation (in-plane retardation) and the orientation angle in the laminate of the stretched films thus obtained through laminating were evaluated in the same manner as in Example 1. The evaluation result of the wavelength dispersion is shown in Table 8 below.

[Table 8]

| Measurement Wavelength (nm) | 447 | 499 | 547 | 590 (R0) | 630 | 750 |
|---|---|---|---|---|---|---|
| In-Plane Retardation (nm) | 48.9 | 54.3 | 57.9 | 60.4 | 62.4 | 66.4 |
| R/R0 | 0.81 | 0.90 | 0.96 | 1.00 | 1.03 | 1.10 |

As shown in Table 8, the laminate of the stretched films produced in Example 5 exhibited the reverse wavelength dispersion such that the retardation decreased as the wavelength of light became shorter, and the R/R0 varied significantly depending on the measurement wavelength.

The laminate of the stretched films produced in Example 5 had an orientation angle (φ) of 0.6°, that is, it had a positive intrinsic birefringence.

[Example 6]

The acrylimide resin used in Example 3 was subjected to press molding at 250°C with a press molding machine and thereby a film with a thickness of approximately 70 μm was formed. Subsequently, the film thus produced was subjected to uniaxial stretching at a stretching temperature of 143°C with the above-mentioned biaxial stretching apparatus in such a manner that stretching ratio of 2 was obtained in the MID direction. Thus, a stretched film (F5) with a thickness of 50 μm was obtained.

Separately, the polymer (B-1A) produced in Production Example 3 was subjected to press molding at 250°C with the press molding machine and thereby a film with a thickness of approximately 180 μm was formed. Subsequently, the film thus produced was subjected to uniaxial stretching at a stretching temperature of 138°C with the above-mentioned biaxial stretching apparatus in such a manner that a stretching ratio of 2 was obtained in the MD direction. Thus, a stretched film (F6) with a thickness of 125 μm was obtained.

Next, with the stretched film (F5) and a layered body of two stretched films (F6) thus produced being used as a first layer and a second layer, respectively, both the films were laminated together while the stretching directions of the respective films were aligned with each other. The wavelength dispersion of the retardation (in-plane retardation) and the orientation angle in the laminate of the stretched films thus obtained through laminating were evaluated in the same manner as in Example 1. The evaluation result of the wavelength dispersion is shown in Table 9 below.

[Table 9]

| Measurement Wavelength (nm) | 447 | 499 | 547 | 590 (R0) | 630 | 750 |
|---|---|---|---|---|---|---|
| In-Plane Retardation (nm) | 66.0 | 75.6 | 82.1 | 86.6 | 90.2 | 97.4 |
| R/R0 | 0.76 | 0.87 | 0.95 | 1.00 | 1.04 | 1.12 |

As shown in Table 9, the laminate of the stretched films produced in Example 6 exhibited the reverse wavelength dispersion such that the retardation decreased as the wavelength of light became shorter, and the R/R0 varied significantly depending on the measurement wavelength.

The laminate of the stretched films produced in Example 6 had an orientation angle (φ) of 0.3°, that is, it had a positive intrinsic birefringence.

[Comparative Example 4]

The wavelength dispersion of the retardation (in-plane retardation) and the orientation angle in the stretched film (F1) produced in Example 4 were evaluated in the same manner as in Example 1. The evaluation result of the wavelength dispersion is shown in Table 10 below.

[Table 10]

| Measurement Wavelength (nm) | 447 | 499 | 547 | 590 (R0) | 630 | 750 |
|---|---|---|---|---|---|---|
| In-Plane Retardation (nm) | 241.4 | 224.5 | 225.8 | 225.2 | 224.6 | 222.3 |
| R/R0 | 1.07 | 1.00 | 1.00 | 1.00 | 1.00 | 0.99 |

As shown in Table 10, the stretched film (F1) exhibited a wavelength dispersion such that the retardation slightly increased as the wavelength of light became shorter.
The stretched film (F1) had an orientation angle (φ) of -0.7°, that is, it had a positive intrinsic birefringence.

[Comparative Example 5]

The wavelength dispersion of the retardation (in-plane retardation) and the orientation angle in the stretched film (F3) produced in Example 5 were evaluated in the same manner as in Example 1. The evaluation result of the wavelength dispersion is shown in Table 11 below.
[Table 11]

| Measurement Wavelength (nm) | 447 | 499 | 547 | 590 (R0) | 630 | 750 |
|---|---|---|---|---|---|---|
| In-Plane Retardation (nm) | 380.6 | 376.3 | 371.9 | 370.6 | 369.7 | 346.1 |
| R/R0 | 1.03 | 1.02 | 1.00 | 1.00 | 1.00 | 0.93 |

As shown in Table 11, the stretched film (F3) exhibited a wavelength dispersion such that the retardation increased as the wavelength of light became shorter.
The stretched film (F3) had an orientation angle (φ) of -0.7°, that is, it had a positive intrinsic birefringence.

[Comparative Example 6]

The polymer (B-1A) produced in Production Example 3 was subjected so press molding at 250°C with a press molding machine and thereby a film wish a thickness of approximately 70 μm was formed. Subsequently, the film thus produced was subjected to uniaxial stretching at a stretching temperature of 138°C with the above-mentioned biaxial stretching apparatus in such a manner that a stretching ratio of 2 was obtained in the MD direction. Thus, a stretched film (F7) with a thickness of 50 μm was obtained.
The wavelength dispersion of the retardation (in-plane retardation) and the orientation angle in the stretched film (F7) were evaluated in the same manner as in Example 1. The evaluation result of the wavelength dispersion is shown in Table 12 below.
[Table 12]

| Measurement Wavelength (nm) | 447 | 499 | 547 | 590 (R0) | 630 | 750 |
|---|---|---|---|---|---|---|

(continued)

| | | | | | | |
|---|---|---|---|---|---|---|
| In-Plane Retardation (nm) | 64.2 | 53.1 | 47.3 | 42.8 | 40.7 | 37.2 |
| R/R0 | 1.50 | 1.24 | 1.11 | 1.00 | 0.95 | 0.87 |

As shown in Table 12, the stretched film (F7) exhibited a wavelength dispersion such that the retardation increased as the wavelength of light became shorter. The degree of the dispersion was considerably high as compared to that of a resin such as polycarbonate or polystyrene.
The stretched film (F7) had an orientation angle (φ) of 89.8°, that is, it had a negative intrinsic birefringence.

[Comparative Example 7]

The acrylimide resin used in Example 3 was subjected to press molding at 250°C with a press molding machine and thereby a film with a thickness of approximately 140 μm was formed. Subsequently, the film thus produced was subjected to uniaxial stretching at a stretching temperature of 143°C with the above-mentioned biaxial stretching apparatus in such a manner that a stretching ratio of 2 was obtained in the MD direction. Thus, a stretched film (F8) with a thickness of 100 μm was obtained.
The wavelength dispersion of the retardation (in-plane retardation) and the orientation angle in the stretched film (F8) were evaluated in the same manner as in Examples 1. The evaluation result of the wavelength dispersion is shown in Table 13 below.
[Table 13]

| Measurement Wavelength (nm) | 447 | 499 | 547 | 590 (R0) | 630 | 750 |
|---|---|---|---|---|---|---|
| In-Plane Retardation (nm) | 792.2 | 775.0 | 744.1 | 735.2 | 728.6 | 708.8 |
| R/R0 | 1.08 | 1.05 | 1.01 | 1.00 | 0.99 | 0.96 |

As shown in Table 13, the stretched film (F8) exhibited a wavelength dispersion such that the retardation increased as the wavelength of light became shorter.
The stretched film (F8) had an orientation angle (φ) of -0.9°, that is, it had a positive intrinsic birefringence.

[Production Example 4]

Eighteen parts by weight of methyl 2-(hydroxymethyl)acrylate (MHMA), 72 parts by weight of methyl methacrylate (MMA), 10 parts by weight of vinylcarbazole, and 90 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.1 part by weight of t-amylperoxyisononanoate (Luperox 570 (trade name), manufactured by Arkema Yoshitomi, Ltd.) was added as a polymerization initiator, and simultaneously a solution containing 0.2 part by weight of the above-mentioned t-amylperoxyisononanoate dissolved in 10 parts by weight of toluene was added dropwise over three hours so that the mixture was subjected to solution polymerization under reflux at about 105 to 110°C. Then the mixture further was warmed to be aged for three hours.
To the resultant polymer solution, 0.9 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.
Subsequently, after further being heated in an autoclave at 240°C for 90 minutes, the resultant polymer solution was dried under reduced pressure at 240°C for one hour. Thus, a transparent polymer (B-1B) was obtained that had a vinylcarbazole unit as a structural unit and a lactone ring structure in its main chain.

[Production Example 5]

Fifteen parts by weight of MHMA, 35 parts by weight of MMA, and 50 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.03 part by weight of t-amylperoxyisononanoate (Luperox 570 (trade name), manufactured by Arkema Yoshitomi, Ltd.) was added as a polymerization initiator, and simultaneously a solution containing 0.06 part by weight of the above-mentioned t-amylperoxyisononanoate dissolved in 3.3 parts by weight of toluene was added dropwise over two hours so that the mixture was subjected to solution polymerization under reflux at about 105 to 110°C. Then the mixture further was warmed to be aged for four hours.
To the resultant polymer solution, 0.1 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.
Subsequently, after further being heated in an autoclave at 240°C for 90 minutes, the resultant polymer solution was dried under reduced pressure at 240°C for one hour. Thus, a transparent polymer (B-2C) having a lactone ring structure in its main chain was obtained.

[Production Example 6]

Six parts by weight of MHMA, 74 parts by weight of MMA, 20 parts by weight of vinylcarbazole, and 90 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.1 part by weight of t-amylperoxyisononanoate (Luperox 570 (trade name), manufactured by Arkema Yoshitomi, Ltd.) was added as a polymerization initiator, and simultaneously a solution containing 0.2 part by weight of the above-mentioned t-amylperoxvisononanoate dissolved in 10 parts by weight of toluene was added dropwise over four hours so that the mixture was subjected to solution polymerization under reflux at about 105 to 110°C. Then the mixture further was warmed to be aged for three hours.
To the resultant polymer solution, 0.9 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.
Subsequently, after further being heated in an autoclave at 240°C for 90 minutes, the resultant polymer solution was dried under reduced pressure at 240°C for one hour. Thus, a transparent polymer (B-1C) was obtained that had a vinylcarbazole unit as a structural unit and a lactone ring structure in its main chain.

[Example 7]

The polymer (B-1B) produced in Production Example 4 was subjected to press molding at 250°C with a press molding machine and thereby a film with a thickness of approximately 70 μm was formed. Subsequently, the film thus produced was subjected to free end uniaxial stretching at a stretching temperature of 142°C with an Autograph (manufactured by Shimadzu Corporation) in such a manner that a stretching ratio of 2 was obtained. Thus, a stretched film (F9) with a thickness of 45 μm was obtained.
Separately, a methylene chloride solution (with a concentration of 15 wt%) of cellulose acetate propionate (manufactured by Aldrich, Mn=15000) was cast onto a glass plate, which then was dried. Thus, a film with a thickness of 70 μm was obtained. The resultant film was subjected to free end uniaxial stretching at a stretching temperature of 160°C with the above-mentioned Autograph in such a manner that a stretching ratio of 1.8 was obtained. Thus, a stretched film (F10) with a thickness of 50 μm was obtained.
Next, one stretched film (F9) and two stretched films (F10) were laminated together in such a manner that the film F9 was sandwiched between the films F10 while the stretching directions (stretching axes) of the respective films were aligned with each other. The wavelength dispersion of the retardation (in-plane retardation) in the resultant laminate of the stretched films was evaluated in the same manner as in Example 1. The evaluation result is shown in Table 14 below.
[Table 14]

| Measurement Wavelength (nm) | 447 | 590 (R0) | 750 |
|---|---|---|---|

(continued)

| | | | |
|---|---|---|---|
| In-Plane Retardation (nm) | 44.7 | 55.5 | 60.7 |
| R/R0 | 0.80 | 1.00 1.09 | |

As shown in Table 14, the laminate of the stretched films produced ion Example 7 exhibited the reverse wavelength dispersion such that the retardation decreased as the wavelength of light became shorter, and the R/R0 varied significantly depending on the measurement wavelength.

[Comparative Example 8]

The wavelength dispersion of the retardation (in-plane retardation) with respect to the stretched film (F10) produced in Example 7 was evaluated in the same manner as in Example 1. The evaluation result is shown in Table 15 below.
[Table 15]

| Measurement Wavelength (nm) | 447 | 590 (R0) | 750 |
|---|---|---|---|
| In-Plane Retardation (nm) | 113.0 | 109.2 | 108.0 |
| R/R0 | 1.03 | 1.00 | 0.99 |

As shown in Table 15, the stretched film (F10) exhibited a wavelength dispersion such that the retardation increased slightly as the wavelength of light became shorter.
The orientation angle of the stretched film (F10) was evaluated with the automatic birefringence meter (KOBRA-WR, manufactured by Qji Scientific Instruments). As a result, it had an orientation angle (φ) of 1.4°, that is, cellulose acetate propionate had a positive intrinsic birefringence.

[Comparative Example 9]

With respect to the stretched film (F9) produced in Example 7, the wavelength dispersion of the retardation (in-plane retardation) thereof was evaluated in the same manner as in Example 1. The evaluation result is shown in Table 16 below.
[Table 16]

| Measurement Wavelength (nm) | 447 | 590 (R0) | 750 |
|---|---|---|---|
| In-Plane Retardation (nm) | 64.2 | 42.8 | 37.2 |
| R/R0 | 1.50 | 1.00 | 0.87 |

As shown in Table 16, the stretched film (F9) exhibited a wavelength dispersion such that the retardation increased as the wavelength of light became shorter, and the degree of the wavelength dispersion was considerably high.
The orientation angle of the stretched film (F9) was evaluated with the automatic birefringence meter (KOBRA-WR, manufactured by Oji Scientific Instruments). As a result, it had an orientation angle (φ) of -86.4°, that is, the polymer (B-1B) had a negative intrinsic birefringence.

[Example 8]

Twenty parts by weight of polymer (B-1B) produced in Production Example 4 and 10 parts by weight of polymer (B-2C) produced in Production Example 5 were dissolved in methyl isobutyl ketone. The whole was stirred to be mixed uniformly. Subsequently, the resultant mixed solution was dried under reduced pressure at 240°C for one hour. Thus, a solid resin was obtained.

Next, the resultant resin was subjected to press molding at 250°C with a press molding machine and thereby a film with a thickness of approximately 90 μm was formed. Subsequently, the film thus produced was subjected to free end uniaxial stretching at a stretching temperature of 143°C with the above-mentioned Autograph in such a manner that a stretching ratio of 2 was obtained. Thus, a stretched film (F11) with a thickness of 49 μm was obtained.

With respect to the resultant stretched film (F11), the wavelength dispersion of the retardation (in-plane retardation) thereof was evaluated in the same manner as in Example 1. The evaluation result is shown in Table 17 below.

[Table 17]

| Measurement Wavelength (nm) | 447 | 590 (R0) | 750 |
|---|---|---|---|
| In-Plane Retardation (nm) | 59.8 | 80.8 | 89.4 |
| R/R0 | 0.74 | 1.00 | 1.11 |

As shown in Table 17, the stretched film (F11) exhibited the reverse wavelength dispersion such that the retardation decreased as the wavelength of light became shorter, and the degree of the wavelength dispersion was high.

[Example 9]

The polymer (B-2C) produced in Production Example 5 was subjected to press molding at 250°C with a press molding machine and thereby a film (F12) with a thickness of approximately 80 μm was formed. Subsequently, a toluene solution (with a concentration of 30 wt%) of the polymer (B-1C) produced in Production Example 6 was applied uniformly to the surface of the resultant film (F12) with a bar coater #58. The whole was then dried at 60°C for one hour and at 120°C for 15 minutes. Thus, a layered body was obtained that had a layered structure of the film (F12) and a layer formed of the polymer (B-1C). Subsequently, the layered body thus produced was subjected to free end uniaxial stretching at a stretching temperature of 142°C with the above-mentioned Autograph in such a manner that a stretching ratio of 2 was obtained. Thus, a stretched film (F13) with a thickness of 70 μm was obtained that had a layered structure of a stretched body of the film (F12) and a stretched body of the polymer (B-1C).

With respect to the resultant stretched film (F13), the wavelength dispersion of the retardation (in-plane retardation) thereof was evaluated in the same manner as in Example 1. The evaluation result is shown in Table 18 below.

[Table 18]

| Measurement Wavelength (nm) | 447 | 590 (R0) | 750 |
|---|---|---|---|
| In-Plane Retardation (nm) | 58.4 | 79.3 | 87.8 |
| R/R0 | 0.74 | 1.00 | 1.11 |

As shown in Table 18, the stretched film (F13) exhibited the reverse wavelength dispersion such that the retardation decreased as the wavelength of light became shorter, and the degree of the wavelength dispersion was high.

Separately, the wavelength dispersion of the retardation (in-plane retardation) of a stretched film obtained by stretching the film (F12) alone in the same manner without applying the solution of the polymer (B-1C) thereto was

evaluated. As a result, it exhibited a wavelength dispersion such that the retardation increased as the wavelength of light became shorter. Furthermore, it had an orientation angle (φ) of about 0°, that is, the polymer (B-2C) had a positive intrinsic birefringence.

Moreover, a stretched film formed of the polymers (B-1C) was produced in the same manner as in the case of the stretched film (F9) in Example 7 and the wavelength dispersion of the retardation (in-plane retardation) thereof was evaluated. As a result, it exhibited a wavelength dispersion such that the retardation increased as the wavelength of light became shorter, and the degree of the wavelength dispersion was considerably high. Furthermore, it had an orientation angle (φ) of about -90°, that is, the polymer (B-1C) had a negative intrinsic birefringence.

[Example 10]

The polymer (B-1B) produced in Production Examples 4 was subjected to press molding at 250°C with a press molding machine and thereby a film with a thickness of approximately 70 μm was formed. Subsequently, the film thus produced was subjected to free end uniaxial stretching at a stretching temperature of 142°C with the above-mentioned Autograph in such a manner that a stretching ratio of 2 was obtained. Thus, a stretched film (F14) with a thickness of 45 μm was obtained.

Separately, a cycloolefin polymer film (Zeonor ZF14, manufactured by ZEON Corporation) was subjected to free end uniaxial stretching at a stretching temperature of 142°C with the above-mentioned Autograph in such a manner that a stretching ratio of 2 was obtained. Thus, a stretched film (F15) with a thickness of 63 μm was obtained.

Next, with the stretched film (F14) and stretched film (F15) thus produced being used as a first layer and a second layer, respectively, both the films were laminated together while the stretching directions of the respective films were aligned with each other. The wavelength dispersion of the retardation (in-plane retardation) in the laminate of the stretched films thus obtained through laminating was evaluated in the same manner as in Example 1. The evaluation result is shown in Table 19 below.

[Table 19]

| Measurement Wavelength (nm) | 447 | 590 (R0) | 750 |
|---|---|---|---|
| In-Plane Retardation (nm) | 408.1 | 441.7 | 463.8 |
| R/R0 | 0.92 | 1.00 | 1.05 |

As shown in Table 19, the laminate of the stretched films (F14) and (F15) exhibited the reverse wavelength dispersion such that the retardation decreased as the wavelength of light became shorter.

[Comparative Example 10]

The wavelength dispersion of the retardation (in-plane retardation) in the stretched film (F15) produced in Examples 10 was evaluated in the same manner as in Example 1. The evaluation result is shown in Table 20 below.

[Table 20]

| Measurement Wavelength (nm) | 447 | 590 (R0) | 750 |
|---|---|---|---|
| In-Plane Retardation (nm) | 550.8 | 546.4 | 546.5 |
| R/R0 | 1.01 | 1.00 | 1.00 |

As shown in Table 20, the stretched film (F15) exhibited a wavelength dispersion such that the retardation

increased slightly as the wavelength of light became shorter.

Whether the intrinsic birefringence of the stretched film (F15) was positive or negative was evaluated by determining the orientation angle of the film. As a result, it had a positive intrinsic birefringence.

[Production Example 7]

Twenty five parts by weight of MHMA, 68 parts by weight of MMA, 7 parts by weight of vinylcarbazole, and 90 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.04 part by weight of t-amylperoxyisononanoate (Luperox 570 (trade name), manufactured by Arkema Yoshitomi, Ltd.) was added as a polymerization initiator, and simultaneously a solution containing 0.08 part by weight of the above-mentioned t-amylperoxyisononanoate dissolved in 10 parts by weight of toluene was added dropwise over three hours so that the mixture was subjected to solution polymerization under reflux at about 105 to 110°C. Then the mixture further was warmed to be aged for four hours.

To the resultant polymer solution, 0.9 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.

Subsequently, after further being heated in an autoclave at 240°C for 90 minutes, the resultant polymer solution was dried under reduced pressure at 240°C for one hour. Thus, a transparent copolymer (B-3A) was obtained that had a vinylcarbazole unit as a structural unit for allowing the polymer to have a negative intrinsic birefringence and a lactone ring structure as a structural unit for allowing the polymer to have a positive intrinsic birefringence.

[Production Example 8]

Twenty five parts by weight of MHMA, 72 parts by weight of MMA, 3 parts by weight of vinylanthracene, and 90 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.04 part by weight of t-amylperoxyisononanoate (Luperox 570 (trade name), manufactured by Arkema Yoshitomi, Ltd.) was added as a polymerization initiator, and simultaneously a solution containing 0.08 part by weight of the above-mentioned t-amylperoxyisononanoate dissolved in 10 parts by weight of toluene was added dropwise over three hours so that the mixture was subjected to solution polymerization under reflux at about 105 to 110°C. Then the mixture further was warmed to be aged for four hours.

To the resultant polymer solution, 0.9 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.

Subsequently, after further being heated in an autoclave at 240°C for 90 minutes, the resultant polymer solution was dried under reduced pressure at 240°C for one hour. Thus, a transparent copolymer (B-3B) was obtained that had a vinylanthracene unit as a structural unit for allowing the polymer to have a negative intrinsic birefringence and a lactone ring structure as a structural unit for allowing the polymer to have a positive intrinsic birefringence.

[Example 11]

The copolymer (B-3A) produced in Production Example 7 was subjected to press molding at 250°C with a press molding machine and thereby a film with a thickness of approximately 190 μm was formed. Subsequently, the film thus produced was subjected to free end uniaxial stretching at a stretching temperature of 148°C with the above-mentioned Autograph in such a manner that a stretching ratio of 2 was obtained. Thus, a stretched film with a thickness of 130 μm was obtained.

The wavelength dispersion of the retardation of the resultant stretched film was evaluated in the same manner as in Example 1. The evaluation result is shown in Table 21 below.

[Table 21]

| Measurement Wavelength (nm) | 447 | 590 (R0) | 750 |
|---|---|---|---|

(continued)

| | | | |
|---|---|---|---|
| In-Plane Retardation (nm) | 85.7 | 105.2 | 110.0 |
| R/R0 | 0.81 | 1.00 | 1.04 |

As shown in Table 21, the stretched film obtained in Example 11 exhibited the reverse wavelength dispersion such that the retardation decreased as the wavelength of light became shorter, and the R/R0 varied significantly depending on the measurement wavelength.

[Example 12]

The copolymer (B-3B) produced in Production Example 8 was subjected to press molding at 250°C with a press molding machine and thereby a film with a thickness of approximately 130 μm was formed. Subsequently, the film thus produced was subjected to free end uniaxial stretching at a stretching temperature of 148°C with the above-mentioned Autograph in such a manner that a stretching ratio of 2 was obtained. Thus, a stretched film with a thickness of 90 μm was obtained.

The wavelength dispersion of the retardation of the resultant stretched film was evaluated in the same manner as in Example 1. The evaluation result is shown in Table 22 below.

[Table 22]

| Measurement Wavelength (nm) | 447 | 590 (R0) | 750 |
|---|---|---|---|
| In-Plane Retardation (nm) | 101.7 | 110.5 | 113.8 |
| R/R0 | 0.92 | 1.00 | 1.03 |

As shown in Table 22, the stretched film obtained in Example 12 exhibited the reverse wavelength dispersion such that the retardation decreased as the wavelength of light became shorter.

[Production Example 9]

Fifteen parts by weight of methyl 2-(hydroxymethyl)acrylate (MHMA), 35 parts by weight of methyl methacrylate (MMA), and 50 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.03 part by weight of t-amylperoxyisononanoate (Luperox 570 (trade name), manufactured by Arkema Yoshitomi, Ltd.) was added as a polymerization initiator, and simultaneously a solution containing 0.06 part by weight of the above-mentioned t-amylperoxyisononanoate dissolved in 3.34 parts by weight of toluene was added dropwise over two hours so that the mixture was subjected to solution polymerization under reflux at about 105 to 110°C. Then the mixture further was aged for four hours.

To the resultant polymer solution, 0.1 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.

Subsequently, after further being heated in an autoclave at 240°C for 90 minutes, the resultant polymer solution was dried under reduced pressure at 240°C for one hour. Thus, a transparent polymer (B-2D) having a lactone ring structure in its main chain was obtained.

[Production Example 10]

576 parts by weight of deionized water was charged into a reaction apparatus equipped with a stirrer, a temperature sensor, a condenser tube, and a nitrogen inlet tube, and it was heated to 80°C while nitrogen gas was introduced thereinto. When the temperature inside the reaction apparatus was stabilized at 80°C, 534 parts by weight of N-vinyl-2-pyrrolidone and a solution containing 2.45 parts by weight of 2,2'-azobis(2-methylpropioamidine) dihydrochloride dissolved in 75.8 parts by weight of deionized water, as a polymerization initiator, were added dropwise inside the apparatus over three hours. After completion of dropwise addition, it was subjected to a reaction for four hours while the temperature was maintained at 80°C. Subsequently, the resultant polymer solution was dried under reduced pressure at 150°C for two hours and thereby a polymer (B-1D) of N-vinyl-2-pyrrolidone was obtained. The resultant polymer had a K-value of 59.8. The "K-value" is a viscosity characteristic value correlating with the molecular weight of a polymer and it was measured by a Fikentscher method.

The method of measuring the K-value according to the Fikentscher method is as follows. First, 1.0 g of polymers to be measured is dissolved in distilled water at room temperature and thereby a solution with a volume of 100 mL is obtained. Subsequently, the resultant solution is allowed to stand in a constant temperature bath kept at 25°C ± 0.2°C for 30 minutes. Thereafter, the relative viscosity [η] of the solution is determined using an Ubbelohde viscometer. In determining the relative viscosity, distilled water is used as a reference solution, and the flow times measured with the viscometer with respect to the above-mentioned solution and distilled water are corrected according to the Hagenbach-Couette correction. The relative viscosity [η] is determined from the flow time t1 of the solution and the flow time t2 of distilled water by a formula [η] = t1/t2. The K-value is obtained from the relative viscosity [η] thus obtained and the concentration C (g/100 mL) of the solution by the following formula:

$$\text{K-value}=\{\{300C\cdot\log[\eta]+(C+1.5C\cdot\log[\eta])^2\}^{1/2}+1.5C\cdot\log[\eta]\cdot C\}/(0.15C+0.003C^2).$$

When the K-value measured by this method is lower than 20, it is measured again, with the concentration of the solution being changed to 5.0 (g/100 mL).

[Production Example 11]

The N-vinyl-2-pyrrolidone polymer (B-1D) produced in Production Example 10 had strong hygroscopicity and thereby had difficulty forming a layer by itself. Therefore, in Production Example 11, a polymer to serve as a binder for the N-vinyl-2-pyrrolidone polymer was produced as follows.

Ten parts by weight of methyl 2-(hydroxymethyl)acrylate (MHMA), 40 parts by weight of methyl methacrylate (MMA), and 50 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.03 part by weight of t-amylparoxyisononanoate (Luperox 570 (trade name), manufactured by Arkema Yoshitomi, Ltd.) was added as a polymerization initiator, and simultaneously a solution containing 0.06 part by weight of the above-mentioned t-amylperoxyisononanoate dissolved in 3.34 parts by weight of toluene was added dropwise over two hours so that the mixture was subjected to solution polymerization under reflux at about 105 to 110°C. Then the mixture further was aged for four hours.

To the resultant polymer solution, 0.045 part by weight of a mixture of octyl phosphate and dioctyl phosphate was added as a catalyst (a cyclization catalyst) for a reaction. Then, under reflux at about 80 to 105°C, the mixture was subjected to a cyclocondensation reaction for two hours.

Subsequently, after further heating in an autoclave at 240°C for 90 minutes, 5 parts by weight of acrylonitrile-styrene (AS) copolymer was added to the resultant polymers solution. The polymer solution with the AS copolymer added thereto was then dried under reduced pressure at 240°C for one hour. Thus, a transparent resin (E) was obtained that contained a mixture of the AS copolymer and a (meth)acrylic polymer having a lactone ring structure in its main chain.

The resin (E) thus produced was subjected to press molding at 250°C with a press molding machine and thereby a film with a thickness of 120 μm was formed. The film thus produced was subjected to uniaxial stretching at a stretching temperature of 142°C with an Autograph (manufactured by Shimadzu Corporation) in such a manner that a stretching ratio of 2 was obtained. The retardation of the resultant stretched film was evaluated with the automatic birefringence meter (KOBRA-WR, manufactured by Oji Scientific Instruments). As a result, the in-plane retardation per 100 μm in thickness was approximately 10 nm or smaller over the measurement wavelength range of 447 nm to 750 nm.

[Production Example 12]

Ten parts by weight of methyl 2-(hydroxymethyl)acrylate (MHMA), 40 parts by weight of methyl methacrylate (MMA), and 50 parts by weight of toluene used as a polymerization solvent were charged into a reaction apparatus

equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.03 part by weight of t-amylperoxyisononanoate (Luperox 570 (trade name), manufactured by Arkema Yoshitomi, Ltd.) was added as a polymerization initiator, and simultaneously a solution containing 0.06 part by weight of the above-mentioned t-amylperoxyisononanoate dissolved in 3.34 parts by weight of toluene was added dropwise over two hours so that the mixture was subjected to solution polymerization under reflux at about 105 to 110°C. Then the mixture further was aged for four hours.

To the resultant polymer solution, 0.045 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.

Subsequently, after further being heated in an autoclave at 240°C for 90 minutes, the resultant polymer solution was dried under reduced pressure at 240°C for one hour. Thus, a transparent polymer (B-2E) having a lactone ring structure in its main chain was obtained.

[Production Example 13]

Seventy parts by weight of methyl 2-(hydroxymethyl)acrylate (MHMA), 380 parts by weight of methyl methacrylate (MMA), 50 parts by weight of N-vinyl-2-pyrrolidone, as well as 250 parts by weight of toluene and 250 parts by weight of methyl isobutyl ketone that were used as polymerization solvents were charged into a reaction apparatus equipped with a stirrer, a temperature sensor, a condenser tube, and a nitrogen inlet tube, and the mixture was heated to 80°C while nitrogen gas was introduced thereinto. After the polymerization system was stabilized at 80°C, a solution containing 1 part by weight of 2,2'-azobis(2-methylbutyronitrile) dissolved in 10 parts by weight of toluene was added as a polymerization initiator and the mixture was subjected to a solution polymerization for eight hours while the polymerization system was maintained at approximately 83°C.

To the resultant polymer solution, 0.5 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.

Subsequently, after further being heated in an autoclave at 240°C for 90 minutes, the resultant polymer solution was dried under reduced pressure at 240°C for one hour. Thus, a transparent copolymer (B-3C) was obtained that had a N-vinyl-2-pyrrolidone unit as a structural unit for allowing the polymer to have a negative intrinsic birefringence and a lactone ring structure as a structural unit for allowing the polymer to have a positive intrinsic birefringence.

[Example 13]

The polymer (B-2D) produced in Production Example 9 was subjected to press molding at 250°C with a press molding machine and thereby a film with a thickness of approximately 120 μm was formed. Subsequently, the film thus produced was subjected to uniaxial stretching at a stretching temperature of 145°C with the above-mentioned Autograph in such a manner that a stretching ratio of 2.5 was obtained in the MD direction. Thus, a stretched film (F16) with a thickness of 100 μm was obtained.

Separately, a stretched film (F17) with a thickness of 95 μm was obtained in the same manner as described above except that a resin was used instead of the polymers (B-2D). The resin was obtained by uniformly mixing 5 parts by weight of polymer (B-1D) produced in Production Example 10 and 95 parts by weight of resin (E) produced in Production Example 11 in a mixed solvent of methyl ethyl ketone, toluene, and chloroform and then drying the mixture. In this case, the stretching ratio of 2 and a stretching temperature of 132°C were employed.

Next, one stretched film (F160) and four stretched films (F17) were laminated together while the stretching directions (stretching axes) of the respective films were aligned with each other. The wavelength dispersion of the retardation (in-plane retardation) of the resultant laminate of the stretched films was evaluated in the same manner as in Example 1. The evaluation result is shown in Table 23 below.

[Table 23]

| Measurement Wavelength (nm) | 447 | 499 | 547 | 590 (R0) | 630 | 750 |
|---|---|---|---|---|---|---|

(continued)

| | | | | | | |
|---|---|---|---|---|---|---|
| In-Plane Retardation (nm) | 45.4 | 48.0 | 49.7 | 50.9 | 51.8 | 53.7 |
| R/R0 | 0.89 | 0.94 | 0.98 | 1.00 | 1.02 | 1.06 |

As shown in Table 23, the laminate of the stretched films produced in Example 13 exhibited the reverse wavelength dispersion such that the retardation decreased as the wavelength of light became shorter.

[Example 14]

Eighteen parts by weight of polymer (B-2E) produced in Production Example 12 and 2 parts by weight of polymer (B-1D) produced in Production Example 10 were dissolved in a mixed solvent of methyl ethyl ketone, toluene, and chloroform. The resultant solution was stirred and thereby the polymers (B-2E) and (B-1D) were mixed together uniformly. Subsequently, the resultant mixed solution was dried under reduced pressure at 240°C for one hour and thereby a resin containing the polymers (B-2E) and (B-1D) was obtained.

Next, the resultant resin was subjected to press molding at 250°C with a press molding machine and thereby a film with a thickness of approximately 100 μm was formed. Subsequently, the film thus produced was subjected to uniaxial stretching at a stretching temperature of 139°C with the above-mentioned Autograph in such a manner that a stretching ratio of 2 was obtained. Thus, a stretched film with a thickness of 60 μm was obtained.

The wavelength dispersion of the retardation (in-plane retardation) of the resultant stretched film was evaluated in the same manner as in Example 1. The evaluation result is shown in Table 24 below.

[Table 24]

| Measurement Wavelength (nm) | 447 | 499 | 547 | 590 (R0) | 630 | 750 |
|---|---|---|---|---|---|---|
| In-Plane Retardation (nm) | 73.7 | 74.5 | 75.0 | 75.5 | 75.7 | 77.7 |
| R/R0 | 0.98 | 0.99 | 0.99 | 1.00 | 1.00 | 1.03 |

As shown in Table 24, the stretched film produced in Example 14 exhibited the reverse wavelength dispersion such that the retardation decreased as the wavelength of light became shorter.

[Example 15]

The copolymer (B-3C) produced in Production Example 13 was subjected to press molding at 250°C with a press molding machine and thereby a film with a thickness of approximately 100 um was formed. Subsequently, the film thus produced was subjected to uniaxial stretching at a stretching temperature of 130°C with the above-mentioned Autograph in such a manner that a stretching ratio of 2 was obtained in the MD direction. Thus, a stretched film with a thickness of 60 μm was obtained.

The wavelength dispersion of the retardation (in-plane retardation) of the resultant stretched film was evaluated in the same manner as in Example 1. The evaluation result is shown in Table 25 below.

[Table 25]

| Measurement Wavelength nm | 447 | 499 nm) | 547 | 590 (R0) | 630 | 750 |
|---|---|---|---|---|---|---|
| In-Plane Retardation (nm) | 20.3 | 20.6 | 21.1 | 21.3 | 21.3 | 21.8 |

(continued)

| | | | | | | |
|---|---|---|---|---|---|---|
| R/R0 | 0.95 | 0.97 | 0.99 | 1.00 | 1.00 | 1.02 |

As shown in Table 25, the stretched film produced in Example 15 exhibited the reverse wavelength dispersion such that the retardation decreased as the wavelength of light became shorter.

[Comparative Example 11]

With respect to the stretched film (F16) (formed of the polymer (B-2D) produced in Production Example 9) produced in Examples 13, the wavelength dispersion of the retardation (in-plane retardation) thereof was evaluated in the same manner as in Example 1. The evaluation result is shown in Table 26 below.

[Table 26]

| Measurement Wavelength nm | 447 | 499 | 547 | 590 (R0) | 630 | 750 |
|---|---|---|---|---|---|---|
| In-Plane Retardation (nm) | 357.1 | 332.1 | 334.0 | 333.1 | 332.2 | 328.8 |
| R/R0 | 1.07 | 1.00 | 1.00 | 1.00 | 1.00 | 0.99 |

As shown in Table 26, the stretched film (F16) exhibited a wavelength dispersion such that the retardation increased as the wavelength of light became shorter.

Separately, the orientation angle of the stretched film (F16) was evaluated with the automatic birefringence meter (KOBRA-WR, manufactured by Oji Scientific Instruments). As a result, it had an orientation angle (φ) of-0.7°, that is, the polymer (B-2D) produced in Production Example 9 had a positive intrinsic birefringence.

[Comparative Example 12]

With respect to the stretched film (F17) (formed of the polymer (B-1D) produced in Production Example 10 and the resin (E) produced in Production Example 11) produced in Example 13, the wavelength dispersion of the retardation (in-plane retardation) thereof was evaluated in the same manner as in Example 1. The evaluation result is shown in Table 27 below.

[Table 27]

| Measurement wavelength (nm) | 447 | 499 | 547 | 590 (R0) | 630 | 750 |
|---|---|---|---|---|---|---|
| In-Plane Retardation (nm) | 29.6 | 25.9 | 23.7 | 21.8 | 20.9 | 17.8 |
| R/R0 | 1.36 | 1.19 | 1.09 | 1.00 | 0.96 | 0.82 |

As shown in Table 27, the stretched film (F17) exhibited a wavelength dispersion such that the retardation increased as the wavelength of light became shorter, and the degree of the wavelength dispersion was considerably high.

Separately, the orientation angle of the stretched film (F17) was evaluated with the automatic birefringence meter (KOBRA-WR, manufactured by Oji Scientific Instruments). As a result, it had an orientation angle (φ) of-86.4°. That is, a resin obtained by mining 5 parts by weight of polymer (B-1D) produced in Production Example 10 and 95 parts by weight of resin (E) produced in Production Example 11 had a negative intrinsic birefringence.

[Production Example 14]

Twenty five parts by weight of MHMA, 63 parts by weight of MMA, 5 parts by weight of cyclohexyl methacrylate (CHMA), 7 parts by weight of vinylcarbazole, and 90 parts by weight of toluene used as a polymerization solvent were charged into a reaction apparatus equipped with a stirrer, a temperature sensor, a condenser tube, and a nitrogen inlet tube, and the mixture was heated to 105°C while nitrogen gas was introduced thereinto. When the reflux started as the temperature of the mixture increased, 0.04 part by weight of t-amylperoxyisononanoate (Luperox 570 (trade name), manufactured by Arkema Yoshitomi, Ltd.) was added as a polymerization initiator, and simultaneously a solution containing 0.08 part by weight of the above-mentioned t-amylperoxyisononanoate dissolved in 10 parts by weight of toluene was added dropwise over three hours so that the mixture was subjected to solution polymerization under reflux at about 105 to 110°C. Then the mixture further was warmed to be aged for four hours.

To the resultant polymer solution, 0.9 part by weight of a mixture of octyl phosphate and dioctyl phosphate was added as a catalyst (a cyclization catalyst) for a cyclocondensation reaction. Then, under reflux at about 80 to 105°C, the mixture was subjected to a cyclocondensation reaction for two hours.

Subsequently, after further being heated in an autoclave at 240°C for 90 minutes, the resultant polymer solution was dried under reduced pressure at 240°C for one hour. Thus, a transparent copolymer (B-3D) was obtained that had a vinylcarbazole unit as a structural unit for allowing the polymer to have a negative intrinsic birefringence and a lactone ring structure as a structural unit for allowing the polymer to have a positive intrinsic birefringence.

[Example 16]

The copolymer (B-3D) produced in Production Example 14 was subjected to press molding at 250°C with a press molding machine and thereby a film with a thickness of approximately 190 μm was formed. Subsequently, the film thus produced was subjected to free end uniaxial stretching at a stretching temperature of 147°C with the above-mentioned Autograph in such a manner that a stretching ratio of 2 was obtained. Thus, a stretched film with a thickness of 130 μm was obtained.

The wavelength dispersion of the retardation of the resultant stretched film was evaluated in the same manner as in Example 1. The evaluation result is shown in Table 28 below.

[Table 28]

| Measurement Wavelength (nm) | 447 | 590 (R0) | 750 |
|---|---|---|---|
| In-Plane Retardation (nm) | 90.5 | 110.4 | 115.2 |
| R/R0 | 0.82 | 1.00 | 1.04 |

As shown in Table 28, the stretched film obtained in Example 16 exhibited the reverse wavelength dispersion such that the retardation decreased as the wavelength of light became shorter, and the R/R0 varied significantly depending on the measurement wavelength.

The invention may be embodied in other forms without departing from the spirit or essential characteristics thereof. The embodiments disclosed in this specification are to be considered in all respects as illustrative and not limiting. The scope of the invention is indicated by the appended claims rather than by the foregoing description, and all changes which come within the meaning and range of equivalency of the claims are intended to be embraced therein.

INDUSTRIAL APPLICABILITY

The optical film of the present invention can be used widely for image display apparatuses including a liquid crystal display (LCD) and an organic EL display (OLED), as in the case of conventional optical films having birefringent properties. Furthermore, the use of the optical film of the present invention improves display characteristics of the image display apparatuses.

## Claims

1. An optical film, comprising a layer formed of a resin (A) having a heteroaromatic group or a molecular structure represented by a formula (1), (2) or (3):

[Chemical Formula 1]

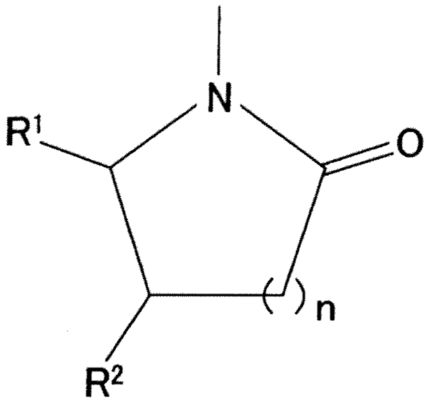

(1)

[Chemical Formula 2]

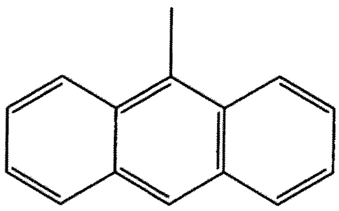

(2)

[Chemical Formula 3]

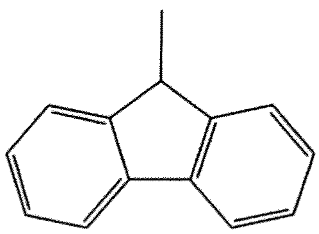

(3)

where in the formula (1), n is a natural number in a range of 1 to 4, and $R^1$ and $R^2$ each independently represent a hydrogen atom or a methyl group, and
exhibiting a wavelength dispersion such that the birefringence of the film decreases as the wavelength becomes shorter, at least in the visible light range.

2. The optical film according to claim 1, wherein the resin (A) is an acrylic resin or a cycloolefin resin.

3. The optical film according to claim 1, wherein the resin (A) has a molecular structure represented by the formula (1).

**4.** The optical film according to claim 1, wherein the resin (A) comprises a polymer (B-1) having, as a structural unit, an α,β-unsaturated monomer unit with a heteroaromatic group, or a unit represented by the following formula (4), (5) or (6):

[Chemical Formula 4]

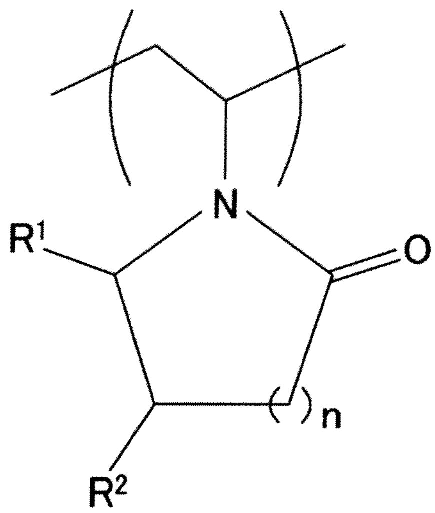

(4)

[Chemical Formula 5]

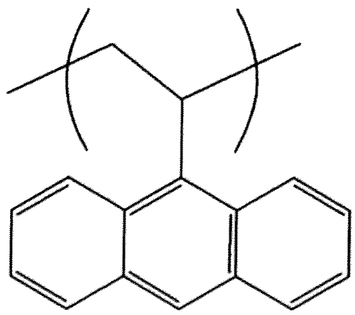

(5)

[Chemical Formula 6]

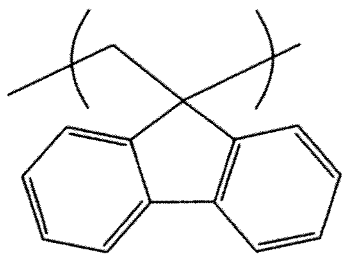

(6)

where in the formula (4), n is a natural number in a range of 1 to 4, and $R^1$ and $R^2$ each independently represent a hydrogen atom or a methyl group.

**5.** The optical film according to claim 4, wherein the polymer (B-1) has, as a structural unit, the α,β-unsaturated monomer unit with a heteroaromatic group, or the unit represented by the formula (4).

**6.** The optical film according to claim 4, wherein the unit represented by the formula (4) is at least one selected from an N-vinyl-2-pyrrolidone unit, an N-vinyl-ε-caprolactam unit, an N-vinyl-2-piperidone unit, an N-vinyl-4-methyl-2-pyrrolidone unit, an N-vinyl-5-methyl-2-pyrrolidone unit, and an N-vinyl-ω-heptalactam unit.

**7.** The optical film according to claim 4, wherein the α,β-unsaturated monomer unit is at least one selected from a vinylcarbazole unit, a vinylpyridine unit, a vinylimidazole unit, and a vinylthiophene unit.

**8.** The optical film according to claim 4, wherein the polymer (B-1) has a negative intrinsic birefringence, and the resin (A) further comprises a polymer (B-2) having a positive intrinsic birefringence.

**9.** The optical film according to claim 8, wherein the polymer (B-2) has a ring structure in its main chain.

**10.** The optical film according to claim 9, wherein the polymer (B-2) is at least one selected from a cycloolefin polymer and a cellulose derivative.

**11.** The optical film according to claims 9, wherein the polymer (B-2) is a (meth)acrylic polymer having a ring structure in its main chain.

**12.** The optical film according to claim 11, wherein the ring structure is at least one selected from a lactone ring structure and a glutarimide structure.

**13.** The optical film according to claim 4, wherein the resin (A) has a negative intrinsic birefringences,
the optical film further comprises a layer formed of a resin (C) having a positive intrinsic birefringence, and
the optical film has a layered structure comprising the layer formed of the resin (A) and the layer formed of the resin (C).

**14.** The optical film according to claim 13, wherein the resin (C) contains a polymer (B-2) having a positive intrinsic birefringence.

**15.** The optical film according to claim 4, wherein the polymer (B-1) has, as a structural unit having an effect of allowing the polymer to have a negative intrinsic birefringence, the α,β-unsaturated monomer unit having a heteroaromatic group, or a unit represented by the formula (4), (5) or (6), and
the polymer (B-1) further has a structural unit having an effect of allowing the polymer to have a positive intrinsic birefringence.

**16.** The optical film according to claim 15, wherein the structural unit having an effect of allowing the polymer (B-1) to have a positive intrinsic birefringence is at least one selected from a (meth)acrylic acid ester unit and a ring structure that is a derivative of a (meth)acrylic acid ester unit.

**17.** An image display apparatus comprising an optical film according to any one of claims 1 to 16.

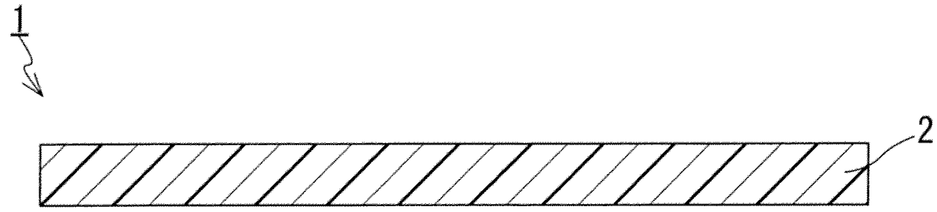


FIG.1

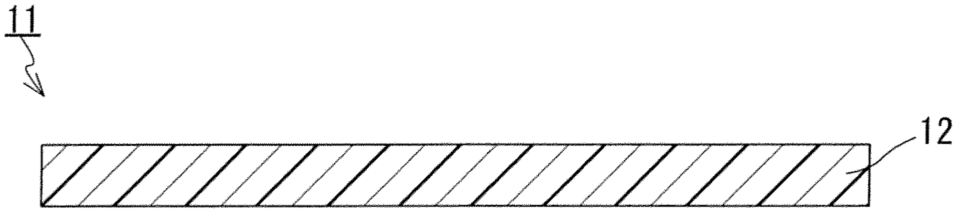


FIG.2

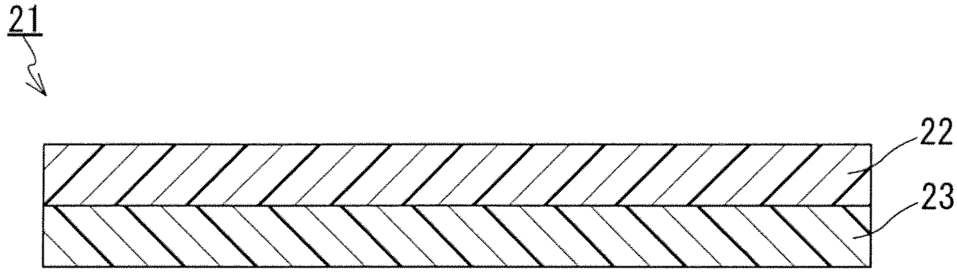


FIG.3

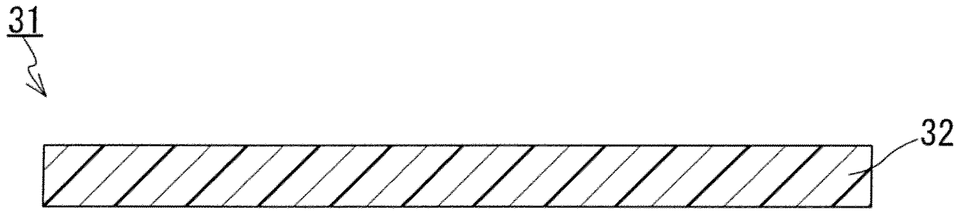


FIG.4

## INTERNATIONAL SEARCH REPORT

International application No.
PCT/JP2008/073808

A. CLASSIFICATION OF SUBJECT MATTER
*G02B5/30*(2006.01)i, *C08J5/18*(2006.01)i, *C08L39/00*(2006.01)i, *C08L41/00*(2006.01)i, *C08L101/12*(2006.01)i, *G02F1/13363*(2006.01)i

According to International Patent Classification (IPC) or to both national classification and IPC

B. FIELDS SEARCHED

Minimum documentation searched (classification system followed by classification symbols)
G02B5/30, C08J5/18, C08L39/00, C08L41/00, C08L101/12, G02F1/13363

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-156528 A (Teijin Ltd.), 31 May, 2002 (31.05.02), Claims; Par. Nos. [0050] to [0067]<br>& JP 3325560 B & US 6565974 B1<br>& US 39753 E & EP 1045261 A1<br>& EP 1457792 A1 & WO 2000/026705 A1<br>& DE 69923536 D & DE 69923536 T<br>& TW 424154 B & CA 2316828 A<br>& CN 1292097 A | 1,17<br>2-16 |
| X<br>A | JP 2004-326089 A (Dainippon Printing Co., Ltd.), 18 November, 2004 (18.11.04), Claims<br>& US 2005/62917 A1 | 1,17<br>2-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 March, 2009 (16.03.09) | 24 March, 2009 (24.03.09) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/073808

C (Continuation). DOCUMENTS CONSIDERED TO BE RELEVANT

| Category* | Citation of document, with indication, where appropriate, of the relevant passages | Relevant to claim No. |
|---|---|---|
| X<br><br>A | JP 2004-291302 A (Toray Industries, Inc.),<br>21 October, 2004 (21.10.04),<br>Claims; Par. No. [0048]<br>(Family: none) | 1,3-6,13,14,<br>17<br>2,7-12,15,16 |
| X<br><br>A | JP 2007-513799 A (Nitto Denko Corp.),<br>31 May, 2007 (31.05.07),<br>Claims; Par. No. [0055]<br>& US 2007/513799 A & WO 2005/45820 A1<br>& KR 10-2006-115859 A & CN 1875413 A | 1,3,4,7,13,<br>14,17<br>2,5,6,8-12,<br>15-16 |
| A | JP 2007-63541 A (Nippon Shokubai Co., Ltd.),<br>15 March, 2007 (15.03.07),<br>Full text; all drawings<br>& EP 1911777 A1 & WO 2007/15512 A1<br>& KR 10-2008-28452 A & CN 1228198 A | 1-17 |
| A | JP 2001-151814 A (Nippon Shokubai Co., Ltd.),<br>05 June, 2001 (05.06.01),<br>Full text; all drawings<br>(Family: none) | 1-17 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007273275 A
- JP 2001337222 A
- JP 2001235622 A
- JP 2001151814 A